(19) Europäisches Patentamt
European Patent Office
Office européen des brevets

(11) **EP 1 640 897 A1**

(12) **EUROPEAN PATENT APPLICATION**
published in accordance with Art. 158(3) EPC

(43) Date of publication:
**29.03.2006 Bulletin 2006/13**

(51) Int Cl.:
***G06Q 10/00*** (0000.00)

(21) Application number: **04745790.8**

(22) Date of filing: **11.06.2004**

(86) International application number:
**PCT/JP2004/008196**

(87) International publication number:
**WO 2005/001731 (06.01.2005 Gazette 2005/01)**

(84) Designated Contracting States:
**AT BE BG CH CY CZ DE DK EE ES FI FR GB GR HU IE IT LI LU MC NL PL PT RO SE SI SK TR**

(30) Priority: **30.06.2003 JP 2003186649**

(71) Applicant: **TDK Corporation**
**Chuo-ku,**
**Tokyo 103-8272 (JP)**

(72) Inventors:
• **YOSHIDA, Tomoyuki**
**Chuo-ku, Tokyo 1038272 (JP)**
• **OIKE, Ai**
**Chuo-ku, Tokyo 1038272 (JP)**

(74) Representative: **Mounteney, Simon James**
**Marks & Clerk**
**90 Long Acre**
**London WC2E 9RA (GB)**

(54) **ORDER RECEPTION PREDICTION SYSTEM, ORDER RECEPTION PREDICTION METHOD, AND ORDER RECEPTION PREDICTION PROGRAM**

(57) An object of the present invention is that calculates a suitable quantity of inventory based on forecast information. In the present invention, at first the conversion coefficients that are ratios of required quantities contained in the past forecast information to corresponding actual order quantities are calculated (S1, S2), the standard deviation of the conversion coefficients whose forecast LTs are the same are calculated (S3), the forecast LT which a value derived from its standard deviation (s/Ave) does not exceed a predetermined threshold is judged to be a valid forecast LTs (S4, S5), a forecast quantity of orders is calculated by multiplying a required quantity corresponding to valid forecast LTs by corresponding conversion coefficients (S6), a margin is calculated by performing an arithmetic operation using the required quantity corresponding to valid forecast LT and the standard deviation of the conversion coefficients corresponding thereto (S7), and the safe stock quantities is calculated by adding the forecast quantity of orders to the margin corresponding thereto (S8).

FIG.5

```
START
  │
S1 │ CREATE FORECAST
   │ TRANSITION TABLE AND
   │ ACTUAL ORDER TABLE
  │
S2 │ CREATE FORECAST
   │ CONVERSION COEFFICIENT
   │ TABLE
  │
S3 │ CALCULATE STANDARD
   │ DEVIATION
  │
S4 │ CALCULATE AVERAGE VALUE
   │ (Ave)
  │
S5 │ s/Ave EQUAL TO
   │ OR LESS THAN      ── NO ──┐
   │ THRESHOLD ?               │
  │ YES                        │
S6 │ CALCULATE FORECAST ORDER  │
   │ QUANTITIES               │
  │                            │
S7 │ CALCULATE MARGINS         │
  │                            │
S8 │ CALCULATE FORECAST STOCK  │
   │ QUANTITIES               │
  │◄──────────────────────────┘
  END
```

**Description**

TECHNICAL FIELD

The present invention relates to an order forecast system, an order forecast method and an order forecast program, and more particularly to an order forecast system, order forecast method and order forecast program for forecasting orders based on forecast information received from customers that is buyers.

BACKGROUND OF THE INVENTION

In the major manufacturing and distribution sectors, considerable attention has in recent years been focused on methods for boosting operational efficiency by implementing management of the chain of activities extending from material procurement to inventory control and product distribution in an integrated manner cutting across corporate and organizational boundaries. Management of this type is commonly referred to as supply chain management or SCM and is known to be a highly effective tool mainly for shortening delivery period, eliminating product stockout and reducing inventory volume.

For the effect of supply chain management to reach full potential, a close and in-depth exchange of information between the supplier and buyers is indispensable. For instance, if buyers provide the supplier with detailed data regarding their purchasing plans, the supplier can use this information to make future production plans that protect against the occurrence of overstock and stockout. Such information regarding order projections, i.e., the outlook for orders from the supplier's point of view, is called "forecast information" and is information required for supply chain management to function adequately.

An explanation will now be given regarding the types and nature of orders received by a supplier. From the supplier's viewpoint, the buyer is a customer. In the following, therefore, the buyer will be called the "customer."

Orders received by the supplier fall in two categories: firm orders and advance orders. A firm order received is one that designates the delivery date and quantity. A firm order received by the supplier is, from the customer's viewpoint, a firm order placed and once the supplier has accepted the firm order, the customer is obligated to complete the transaction. An advance order received is one that designates the quantity but not the delivery date. An advance order received by the supplier is, from the customer's viewpoint, an order that, although not specifying a delivery date, requests that a certain quantity of a product be reserved. Once the supplier has accepted the advance order, the customer is generally obligated to complete the transaction. In this aspect, an advance order received is the same as a firm order received.

In contrast, forecast information is not information regarding orders received but information regarding the future order outlook. Such information is therefore indefinite regarding both delivery date and quantity and merely sets out a schedule of projected required quantities by projected delivery dates. Forecast information is ordinarily provided by the customer and does not obligate the customer to complete any transactions. It consists only of projections that help supply chain management to function smoothly.

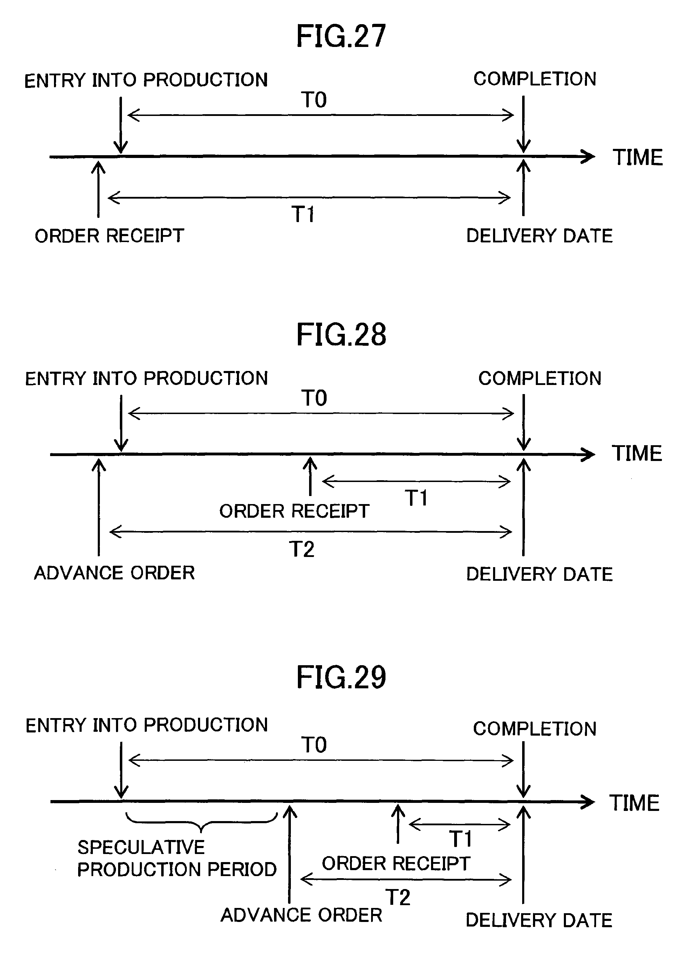

FIG. 27 shows an example of the time relationship between order receipt and production. In the illustrated example, the time period required for production (product lead time) is shorter than (or the same as) the time period from firm order receipt to delivery date. Defining the time period from firm order receipt to delivery date as $T1$ and the product lead time as $T0$, it follows that in the example of FIG. 27,

$$T1 \geq T0,$$

so that production can be started after the firm order is received. In other words, the supplier does not need to stock the item because production can be completed on the delivery date by starting production at the time point following receipt of the firm order when the time period up to the delivery date becomes $T0$. In such cases, therefore, advance orders and forecast information have little bearing on production plans for individual products (or individual product types).

FIG. 28 shows another example of the time relationship between order receipt and production. In this example, the product lead time is longer than the period from firm order to delivery date and is shorter than (or the same as) the time period from advance order receipt to scheduled delivery date. Thus in this example, as shown in FIG. 28,

$$T1 < T0,$$

so that the product cannot be completed by the delivery date if production is started after the firm order is received. However, defining the period from advance order receipt to scheduled delivery date as T2, it follows that

$$T2 \geq T0,$$

so that production can be started after the advance order is received. In this case, production can be completed on the scheduled delivery date by starting production at the time point following receipt of the advance order when the time period up to the scheduled delivery date becomes T0. Since no formal delivery date is defined in an advance order, however, the actual date on which delivery is to be made may be become earlier or later depending on the particulars of the firm order. In order to avoid a stockout, therefore, production must actually be started before the time point when the time period up to the scheduled delivery date becomes T0. This results in some amount of inventory.

FIG. 29 shows still another example of the time relationship between order receipt and production. In this example, the product lead time is longer than the period from advance order to scheduled delivery date. Thus in this example, as shown in FIG. 29,

$$T2 < T0,$$

so that the product cannot be completed by the delivery date and a stockout arises if production is started after the advance order is received. In order to prevent a stockout, it is necessary to "make to stock" based forecast information. As explained above, however, the forecast information is indefinite regarding delivery date and quantity and also subject to change. Moreover, the customer is not under obligation to buy the product, so that the supplier has to bear all of the risk (risk of not being able to meet delivery date because of stockout and risk of stagnant inventory). These delivery period and inventory risks are particularly severe in the case of making customized products to stock.

Patent document 1: Japanese Patent Application Laid-Open No. 2002-140110.

## DISCLOSURE OF THE INVENTION

### PROBLEM TO BE SOLVED BY THE INVENTION

The current tendency is for the life cycle of products to become shorter and shorter. In order for a company to ensure profitability, therefore, it is extremely important for it to carefully time the introduction of products into the market and to make quick adjustments in the quantity of products supplied to the market. Achieving this requires shortening of the period T1 between firm order and delivery date, and the period T2 between advance order and scheduled delivery date. Cases in which, as in the example of FIG. 29, the product lead time T0 is longer than the period T2 from advance order to scheduled delivery date have increased to a very high level. Since this is true of not only general use products but also customized products, it exposes suppliers to ever increasing risks in speculative production.

As a result, the accuracy of forecast information is an exceedingly critical issue for suppliers. Still, customers have difficulty supplying suppliers with accurate forecast information owing to the constant fluctuation of market demand trends. For the supplier to lower delivery and inventory risks, therefore, it is very important for the supplier to make highly accurate order forecasts based on the forecast information obtained from customers.

One object of the present invention is therefore to provide an order forecast system, an order forecast method and an order forecast program capable of making high-accuracy order forecasts based on forecast information.

On the other hand, the figures derived from order forecast results are only estimates, so that errors unavoidably arise between these figures and the actual quantity of firm orders. In order to reliably minimize both delivery risk owing to stockout and inventory risk, therefore, it is important not only to calculate forecast order quantities but also to go a step further to ascertain suitable quantities of inventory.

Another object of the present invention is therefore to provide an order forecast system, an order forecast method and an order forecast program capable of calculating a suitable quantity of inventory based on forecast information.

### MEANS FOR SOLVING PROBLEM

Through an in-depth study into the forecasting of orders utilizing forecast information, the inventors discovered that the correlation between forecast information and corresponding actual order quantity is specific to the particular customer (or customer group) and to the particular product (or product group). In other words, the inventors found that when viewed broadly, the relationship between forecast information and actual order quantity is erratic, so that substantially no consistent relationship can be observed, but when viewed narrowly with respect to a particular product (or product group) and a particular customer (or customer group), a consistent relationship between forecast information and actual order quantity is observed that differs from one customer (or customer group) to another and from one product (or product group) to another.

The present invention was accomplished based on this knowledge. An order forecast system according to the present invention for deciding safe stock quantities based on forecast information indicating required quantities for a plurality of scheduled delivery dates or scheduled delivery periods, which system comprises:

a forecast storage section for storing a plurality of sets of past forecast information having different receive dates;
an actual order quantity storage section for storing actual order quantities for each delivery date or delivery period;
and a processing unit for using the past forecast information stored in the forecast storage section and the actual order quantities stored in the actual order quantity storage section to calculate the safe stock quantities by correcting required quantities in new sets of forecast information for which forecasts are to be made,
wherein the processing unit calculates a plurality of conversion coefficients that are ratios of one or more required quantities contained in the sets of past forecast information to one or more corresponding actual order quantities; calculates a standard deviation of the conversion coefficients whose forecast lead times, defined as a period between forecast receive date and scheduled delivery date, are the same;
judges a forecast lead time whose standard deviation or a value derived therefrom does not exceed a predetermined threshold to be a valid forecast lead time;
calculates a forecast quantity of orders for each scheduled delivery date or scheduled delivery period by performing an arithmetic operation using, among the required quantities contained in the new sets of forecast information, those that correspond to the valid forecast lead times, and the conversion coefficients corresponding thereto;
calculates a margin for each scheduled delivery date or scheduled delivery period by performing an arithmetic operation using, among the required quantities contained in the new sets of forecast information, those that correspond to the valid forecast lead times, and the standard deviation of the conversion coefficients corresponding thereto; and
calculates the safe stock quantities for each scheduled delivery date or scheduled delivery period by adding to the forecast quantity of orders for each scheduled delivery date or scheduled delivery period the margin corresponding thereto.

An order forecast method according to the present invention for deciding safe stock quantities based on forecast information indicating required quantities for a plurality of scheduled delivery dates or scheduled delivery periods, which method comprises:

storing a plurality of sets of past forecast information having different receive dates in a forecast storage section;
storing actual order quantities for each delivery date or delivery period in an actual order quantity storage section;
calculating a plurality of conversion coefficients that are ratios of one or more required quantities contained in the sets of past forecast information stored in the forecast storage section to one or more corresponding actual order quantities among the actual order quantities stored in the actual order quantity storage section;
calculating a standard deviation of the conversion coefficients whose forecast lead times, defined as the period between forecast receive date and scheduled delivery date, are the same;
judging a forecast lead time whose standard deviation or a value derived therefrom does not exceed a predetermined threshold to be a valid forecast lead time;
calculating a forecast quantity of orders for each scheduled delivery date or scheduled delivery period by performing an arithmetic operation using, among the required quantities contained in the new sets of forecast information, those that correspond to the valid forecast lead times, and the conversion coefficients corresponding thereto;
calculating a margin for each scheduled delivery date or scheduled delivery period by performing an arithmetic operation using, among the required quantities contained in the new sets of forecast information, those that correspond to the valid forecast lead times, and the standard deviation of the conversion coefficients corresponding thereto; and
calculating the safe stock quantities for each scheduled delivery date or scheduled delivery period by adding to the forecast quantity of orders for each scheduled delivery date or scheduled delivery period the margin corresponding thereto.

An order forecast program according to the present invention for causing a computer to execute:

a step of calculating a plurality of conversion coefficients that are ratios of one or more required quantities contained in sets of past forecast information to one or more corresponding actual order quantities;

a step of calculating a standard deviation of the conversion coefficients whose forecast lead times, defined as the period between forecast receive date and scheduled delivery date, are the same;

a step of, for each forecast lead time, comparing the standard deviation or a value derived therefrom with a predetermined threshold and judging the forecast lead time to be a valid forecast lead time if the threshold is not exceeded;

a step of performing an arithmetic operation using, among the required quantities contained in the new sets of forecast information, those that correspond to the valid forecast lead times, and the conversion coefficients corresponding thereto, thereby calculating a forecast quantity of orders for each scheduled delivery date or scheduled delivery period;

a step of performing an arithmetic operation using, among the required quantities contained in the new sets of forecast information, those that correspond to the valid forecast lead times, and the standard deviation of the conversion coefficients corresponding thereto, thereby calculating a margin for each scheduled delivery date or scheduled delivery period; and

a step of calculating safe stock quantities for each scheduled delivery date or scheduled delivery period by adding to the forecast quantity of orders for each scheduled delivery date or scheduled delivery period the margin corresponding thereto.

When the processing is carried out separately for each customer (or customer group) and each product (or product group), the forecast order quantity obtained becomes a value that reflects the correlation between the forecast information and the actual order quantity for each customer (or customer group) and each product (or product group) and, as such, is a value with a very high probability of being closer to the actual quantity of firm orders than the required quantity in the forecast information. Moreover, the present invention provides, as a final result, a safe stock quantity that takes into account forecast order quantity and forecast order quantity standard deviation and can be used by the supplier to formulate a product production plan. As a result, the risks of speculative production (delivery period risk owing to stockout and inventory risk) can be markedly diminished. The forecast order quantities can be calculated by multiplying the required quantities contained in new forecast information by the average value of a plurality of corresponding conversion coefficients.

In the present invention, a conversion coefficient is preferably calculated as the ratio of two or more required quantities among the required quantities contained in past forecast information whose forecast lead times are consecutive, to two or more corresponding actual order quantities. When the conversion coefficient is calculated in this manner, order forecasts come to be made taking into account cases in which previous delivery dates were changed and the risks of speculative production are reduced still further. The conversion coefficient in this case is preferably treated as the conversion coefficient corresponding to the forecast lead time among the two or more consecutive forecast lead times whose period is shortest. When dealt with in this manner, a forecast order quantity for the most imminent and important scheduled delivery date or scheduled delivery period can be obtained.

In the present invention, a forecast lead time whose ratio of standard deviation to an average value of a plurality of conversion coefficients corresponding thereto does not exceed a prescribed threshold is preferably judged to be a valid forecast lead time. When this criterion is adopted, the risk is further reduced when speculative production is carried out based on the finally obtained forecast order quantity.

A margin for a scheduled delivery date or scheduled delivery period is preferably calculated by multiplying required quantity data contained in new forecast information by a corresponding conversion coefficient standard deviation to obtain an order quantity standard deviation; calculating a cumulative margin for each scheduled delivery date or scheduled delivery period based on the forecast order quantity standard deviation and an allowable stockout rate; and subtracting from the cumulative margin for the scheduled delivery date or scheduled delivery period a cumulative margin corresponding to the preceding scheduled delivery date or scheduled delivery period. Here the calculation of a cumulative margin for a scheduled delivery date or scheduled delivery period can be done by adding a value obtained by squaring a forecast order quantity standard deviation corresponding to a prescribed scheduled delivery date or scheduled delivery period to a value obtained by squaring a forecast order quantity standard deviation corresponding to a scheduled delivery date or scheduled delivery period preceding the prescribed scheduled delivery date or scheduled delivery period; and multiplying the square root of the value obtained by the addition by a constant based on a stockout rate.

<u>BEST MODE FOR CARRYING OUT THE INVENTION</u>

A preferred embodiment of the present invention will now be explained in detail with reference to the drawings.

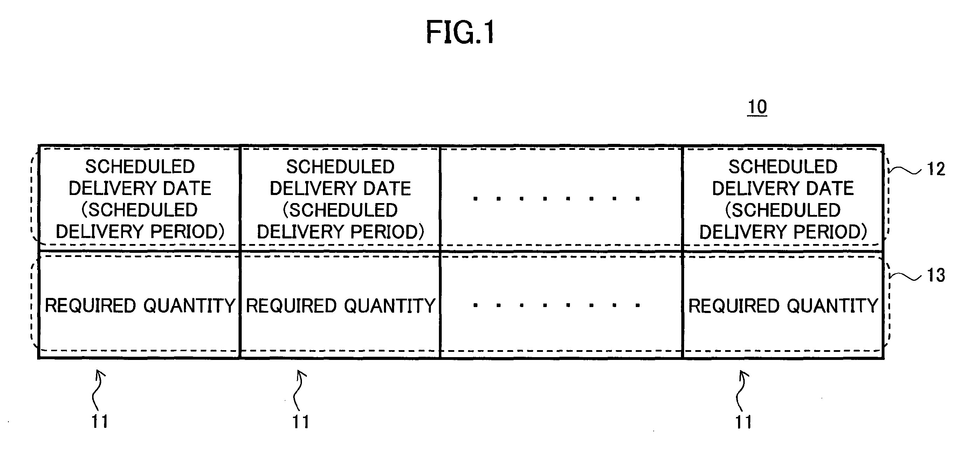

FIG. 1 shows the data structure of ordinary forecast information. As shown in FIG. 1, the forecast information 10 is composed of a plurality of unit data packets 11, 11 ..., each of which is composed of a scheduled delivery date (or scheduled delivery period) 12 and a required quantity 13 designating the quantity of the product to be delivered on the scheduled delivery date (or within the scheduled delivery period).

In the order forecasting according to the present invention, such forecast information 10 is first tabulated to create a transition table. However, the interval between the scheduled delivery dates and the length of the scheduled delivery period (called the "time bucket" in this specification) contained in the forecast information 10 vary widely depending on the customer and product. In addition, the interval at which the forecast information 10 is issued, i.e., the interval at which the forecast information 10 is received by the supplier (called "forecast receive interval" in this specification), also varies widely depending on the customer and product. Creation of the forecast transition table therefore requires separation between cases in which the time bucket and the forecast receive interval coincide and cases in which they do not.

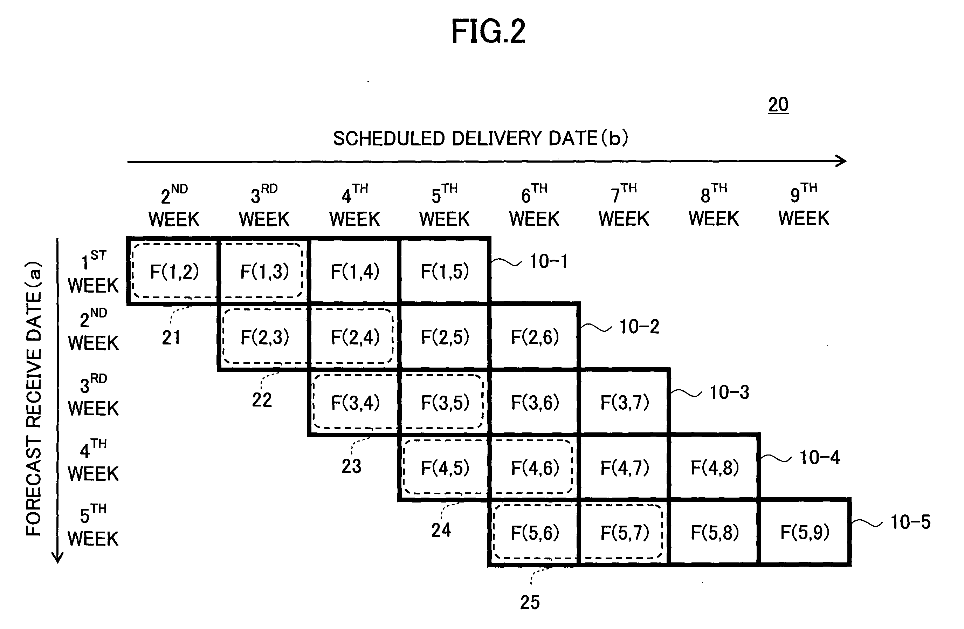

FIG. 2 shows an example of a forecast transition table, for a case where the forecast receive interval and time bucket coincide. As shown in FIG. 2, the forecast transition table 20 is structured to have scheduled delivery date (or scheduled delivery period) assigned to the columns and date of forecast information receipt (called "forecast receive date" in this specification) assigned to the rows. In the columns of FIG. 2, the forecast receive interval and time bucket are both one week. For example, the set of forecast information 10-1 received the first week consists of required quantity data for each week from the second week to the fifth week, and the set of forecast information 10-2 received the second week consists of required quantity data for each week from the third week to the sixth week. Similarly, the sets of forecast information 10-3 to 10-5 received from the third week to the fifth week consists of required quantity data for each week from the fourth week to seventh week, from fifth week to eighth week, and from the sixth week to ninth week.

As shown in FIG. 2, the required quantity data is represented as

$$F(a,b),$$

where "a" is the forecast receive date (in this example, the week received) and "b" is the scheduled delivery date (in this example, scheduled delivery week). For instance, the required quantity data contained in the set of forecast information 10-2 received the second week which indicates the quantity to be delivered the fifth week is designated

$$F(2,5).$$

In the example shown in FIG. 2, each set of forecast information 10-1 to 10-5 indicates the required quantities for from one week later to four weeks later as viewed from the forecast receive date. Therefore, where the period from a forecast receive date (in this example, the week received) to a scheduled delivery date is called as the "forecast lead time" (hereinafter written "forecast LT) and designated "c", it follows that the forecast LT is given by

$$C = b - a.$$

The forecast LT of the required quantity data F(2, 5), for example, is

$$c = 5 - 2 = 3 \ (3 \ \text{weeks}).$$

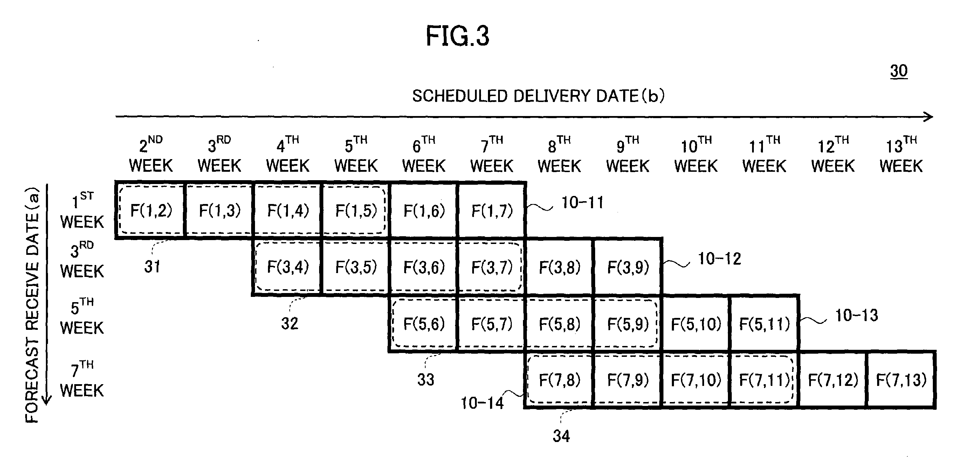

FIG. 3 shows another example of a forecast transition table, for a case where the forecast receive interval and time bucket do not coincide. As shown, the forecast transition table 30 of FIG. 3 shows a case in which the time bucket is one week and the forecast receive interval is two weeks, and in which each set of forecast information 10-11 to 10-14 indicates the required quantities for from one week later to six weeks later as viewed from the forecast receive date (c=1 to 6).

In the examples of FIGs. 2 and 3, every set of the forecast information contains required quantity data whose forecast LT is 1 week (c=1) but cases also exist in which the forecast information contains required quantity data whose forecast LT is 2 weeks (c=2) or later. To the contrary, cases also exist in which the forecast information contains required quantity data whose forecast LT is 0 week (c=0) (e.g., F(1,1)). An example of such a case would be where forecast information received Monday contains required quantity data for products to be delivered Friday of the same week. In other words, the forecast transition tables of FIGs. 2 and 3 are only examples, and in each case a suitable forecast transition table should be created in accordance with the forecast LT of the required quantity data contained in the received forecast information.

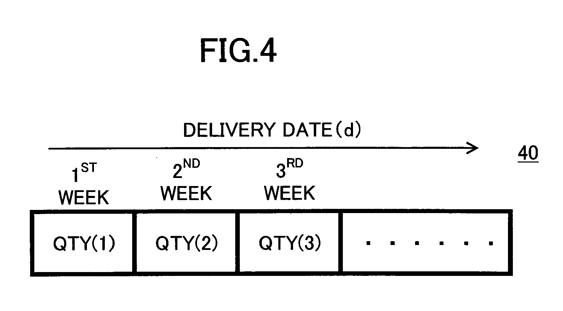

In the order forecast of the present invention, an actual order table indicating the actual order quantity for each time bucket is used together with the aforesaid forecast transition table 20 (30). FIG. 4 shows the structure of an actual order table 40 in which actual order quantities (quantities in firm orders) are indicated for each time bucket. Where, as indicated in FIG. 4, the delivery date (in this example, the delivery week) is defined as "d", the actual order quantity for each time bucket can be represented by

$$QTY(d).$$

Thus, the actual order quantity of the third week would be written

$$QTY(3).$$

It goes without saying that the required quantity data of the forecast information and the actual order quantity do not necessarily match.

In this invention, actual order forecast is performed by analyzing such a forecast transition table 20 (30) and actual order table (40). The order forecast procedure in accordance with a preferred embodiment of the present invention will now be explained in detail using a flow chart.

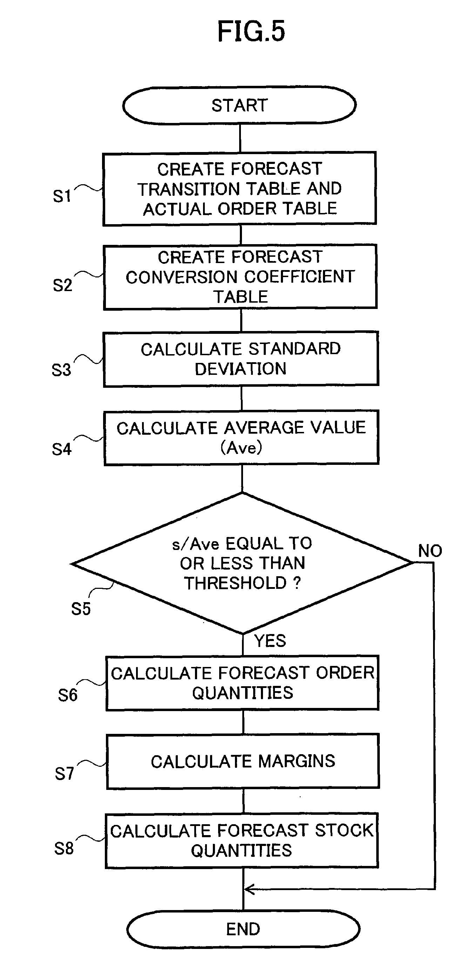

FIG. 5 is a flow chart showing an order forecast method that is a preferred embodiment of the present invention.

As can be seen in FIG. 5, the order forecast in accordance with this embodiment starts with creation of the aforesaid forecast transition table 20 (30) and actual order table 40 (Step 1). As explained earlier, the forecast transition table 20 (30) is created by arranging the received forecast information 10 in order of time so that the scheduled delivery dates (or scheduled delivery periods) are aligned.

Next, a forecast conversion coefficient table is created from the forecast transition table 20 (30) and actual order table 40 (Step S2). Each forecast conversion coefficient (hereinafter called simply "conversion coefficient") is defined as the ratio (QTY/F) of required quantity data contained in the forecast transition table 20 (30) to the corresponding actual order quantity contained in the actual order table 40. The forecast conversion coefficient table shows the conversion coefficients for the respective forecast receive dates arranged by forecast LT. The conversion coefficient is a value indicating how much the required quantity data differs from the actual order quantity. The more the value rises above 100%, the smaller is the required quantity data relative to the actual order quantity, and the more the value goes below 100% the larger is the required quantity data relative to the actual order quantity.

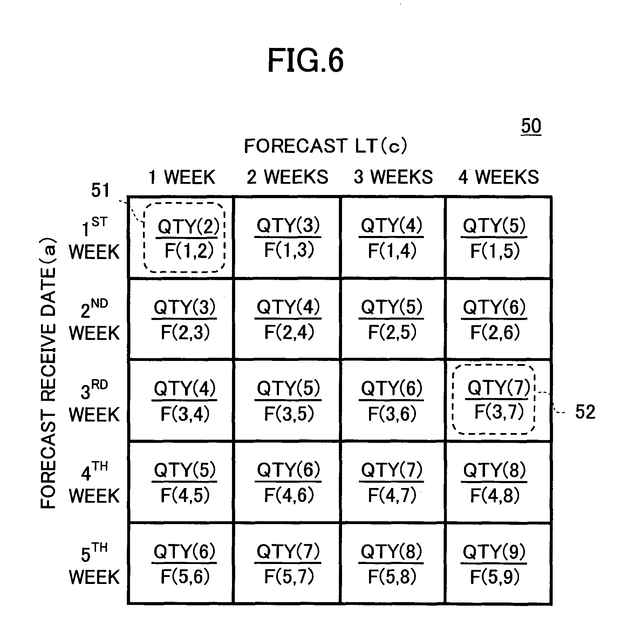

FIG. 6 shows an example of a forecast conversion coefficient table. As shown in FIG. 6, the forecast conversion coefficient table 50 contains a conversion coefficient for each combination of forecast LT and forecast receive date (in this example, week received). The conversion coefficients are derived from the data contained in the forecast transition table 20 of FIG. 2 and the actual order table 40.

The columns of the forecast conversion coefficient table 50 represent forecast LT. For example, the column in which c = 1 is assigned the ratios of required quantity data whose forecast LT is 1 (1 week), i.e., required quantity data for which

$$b - a = 1,$$

to the corresponding actual order quantity, i.e., actual order quantity for which

$$d = b.$$

On the other hand, the rows of the forecast conversion coefficient table 50 represent forecast receive date. For example, the row in which a = 1 is assigned the ratios of required quantity data whose forecast receive date is 1 (week 1) to the corresponding actual order quantity, i.e., the actual order quantity for which

$$d = b.$$

Therefore, to give two examples, the cell 51 that belongs to the c = 1 column and a = 1 row is assigned the ratio of the QTY(2) to the required quantity data F(1,2), i.e.,

$$QTY(2) \; / \; F(1,2),$$

where F(1,2) is the required quantity data among the forecast information received the first week whose forecast LT is 1 and QTY(2) is the corresponding actual order quantity, while the cell 52 that belongs to the c=4 column and a=3 row is assigned the ratio of the QTY(7) to the required quantity data F(3,7), i.e.,

$$QTY(7) \; / \; F(3,7),$$

where F(3,7) is the required quantity data among the forecast information received the third week whose forecast LT is 4 and QTY(7) is the corresponding actual order quantity.

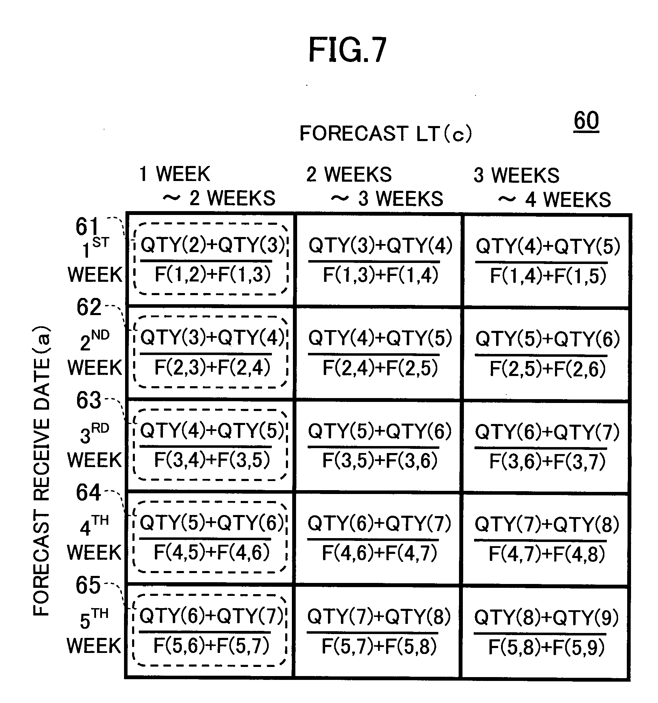

FIG. 7 shows another example of a forecast conversion coefficient table.

Like the forecast conversion coefficient table 50, the forecast conversion coefficient table 60 of FIG. 7 is also derived from the data of the forecast transition table 20 and actual order table 40 but the cells constituting the forecast conversion coefficient table 60 are each assigned the ratio of the sum of two sets of required quantity data whose forecast LTs are consecutive to the sum of the corresponding actual order quantities. For example, each cell in the column in which c=1 & 2 is assigned the ratio of the sum of the required quantity data whose forecast LT is 1 (1 week) and required quantity data whose forecast LT is 2 (two weeks) to the sum of the corresponding actual order quantities. As a result, it follows, for example, that the cells 61 to 65 constituting the column in which c=1 & 2 respectively correspond to the sets of required quantity data 21 to 25 in FIG. 2.

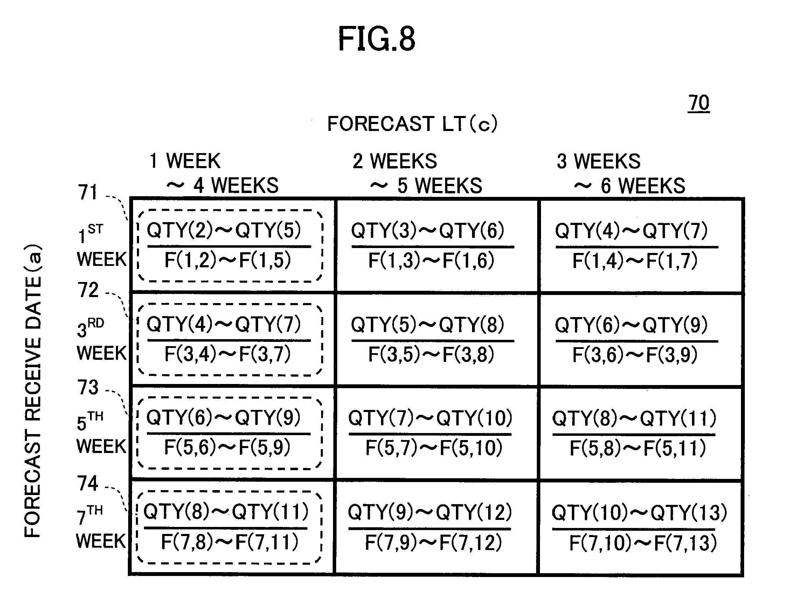

FIG. 8 shows still another example of a forecast conversion coefficient table.

The forecast conversion coefficient table 70 of FIG. 8 is derived from the data of the forecast transition table 30 and actual order table 40. The cells constituting the forecast conversion coefficient table 70 are each assigned the ratio of the sum of four sets of required quantity data whose forecast LTs are consecutive to the sum of the corresponding actual order quantities. For example, each cell in the column in which c = 1 to 4 is assigned the ratio of the sum of the required quantity data whose forecast LTs are 1 (1 week) to 4 (4 weeks) to the sum of the corresponding four actual order quantities. As a result, it follows, for example, that the cells 71 - 74 constituting the column in which c=1 to 4 respectively correspond to the sets of required quantity data 31 to 34 in FIG. 3.

It will be understood that the foregoing forecast conversion coefficient tables are merely examples. In the forecast conversion coefficient table 50 of FIG. 6, the ratio (conversion coefficient) of the required quantity data to the actual order quantity is calculated for every forecast LT; in the forecast conversion coefficient table 60 of FIG. 7, it is calculated for two forecast LTs in combination; and in the forecast conversion coefficient table 70 of FIG. 8, it is calculated for four consecutive forecast LTs. However, the number of combined forecast LTs (= e) in a forecast conversion coefficient table is not limited to the foregoing examples (e=1 in FIG. 6, e=2 in FIG. 7 and e=4 in FIG. 8) and, for example, e=6 and e=8 are also possible. Specifically, the number of combined forecasts e is preferably set small (e.g., e=1 or e=2) when the difference between the forecast information and firm orders is large in terms of quantity but small in terms of delivery, while the number of combined forecasts e is preferably set somewhat large (e.g., e=6 or e=8) when the difference in quantity is small but the difference in delivery is large. The actual value is set in light of the type of customer (or customer group) and type of product (or product group).

The explanation of FIG. 5 will be continued. Next, the forecast conversion coefficient table is used to calculate the standard deviation of the conversion coefficient for each forecast LT or forecast LT group (Step S3). Since, as explained above, the conversion coefficients are calculated for every forecast receive date, a large standard deviation of the conversion coefficients means that the variation among the conversion coefficients of the individual information receive dates is large, while a small standard deviation of the conversion coefficients means that the variation among the conversion coefficients of the individual forecast receive dates is small.

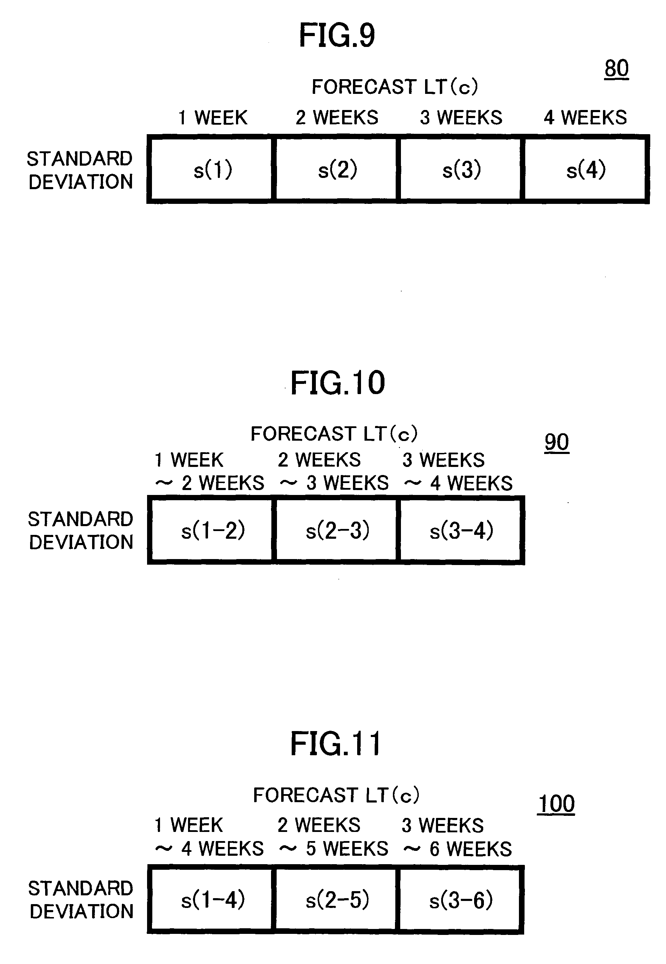

FIG. 9 is a standard deviation table 80 created based on the forecast conversion coefficient table 50 of FIG. 6. It is composed of the standard deviations of the conversion coefficients of the individual forecast LTs. More specifically, the conversion coefficient standard deviation s (1) in the standard deviation table 80 denotes the standard deviation of the values constituting the c=1 column in FIG. 6. Similarly, the conversion coefficient standard deviations s (2), s(3) and s(4) denote the standard deviations of the values constituting the c=2, c=3 and c=4 columns in the same FIG..

FIG. 10 is a standard deviation table 90 created based on the forecast conversion coefficient table 60 of FIG. 7. It is composed of the standard deviations of the conversion coefficients of sets of two consecutive forecast LTs. More specifically, the conversion coefficient standard deviation s(1-2) in the standard deviation table 90 denotes the standard deviation of the values constituting the c=1 & 2 column in FIG. 7. Similarly, the conversion coefficient standard deviations s(2-3) and s(3-4) denote the standard deviations of the values constituting the c=2 & 3 and c=3 & 4 columns in the same FIG..

FIG. 11 is a standard deviation table 100 created based on the forecast conversion coefficient table 70 of FIG. 8. It is composed of the standard deviations of the conversion coefficients of sets of four consecutive forecast LTs. More specifically, the conversion coefficient standard deviation s(1-4) in the standard deviation table 100 denotes the standard deviation of the values constituting the c=1 to 4 column in FIG. 8. Similarly, the conversion coefficient standard deviations s(2-5) and s(3-6) denote the standard deviations of the values constituting the c=2 to 5 and c=3 to 6 columns in the same figure.

When the standard deviations of the conversion coefficients are calculated in Step S3, it is not necessary to use all of the conversion coefficients contained in each forecast LT or set of forecasts LTs. When the number of conversion coefficients is large, i.e., when the forecast information 10 has been compiled over a long period, it is preferable to use only some of the conversion coefficients, including ones that correspond to recent forecast receive dates. This is because when there are very many conversion coefficients and all of them are used, the resulting inclusion of conversion coefficients corresponding to old forecast information and old actual order quantities degrades sensitivity to variation in the correlation between the forecast information and actual order quantities. On the other hand, by using a number of the conversion coefficients among which are included ones that correspond to recent forecast receive dates, it is possible to achieve a highly accurate order forecast because the forecast can follow any changes arising in the correlation between forecast information and actual order quantity. The number of conversion coefficients used to calculate a standard deviation is not particularly defined and it is preferable instead to specify the number in accordance with the age of the forecast receive dates. An example would be to use only conversion coefficients obtained from forecast information with receive dates not more than, say, three months old. By adopting such a standard, a certain degree of sensitivity to fluctuation of the correlation can be realized irrespective of the forecast receive interval and the time bucket length.

Next, the average value of the conversion coefficients is calculated for each forecast LT or set of forecast LTs (Step S4). If the calculation of the conversion coefficient standard deviations in Step S3 was done using not all but only some of the conversion coefficients, it is preferable here to calculate the average for only the conversion coefficients that were used to calculate the standard deviations.

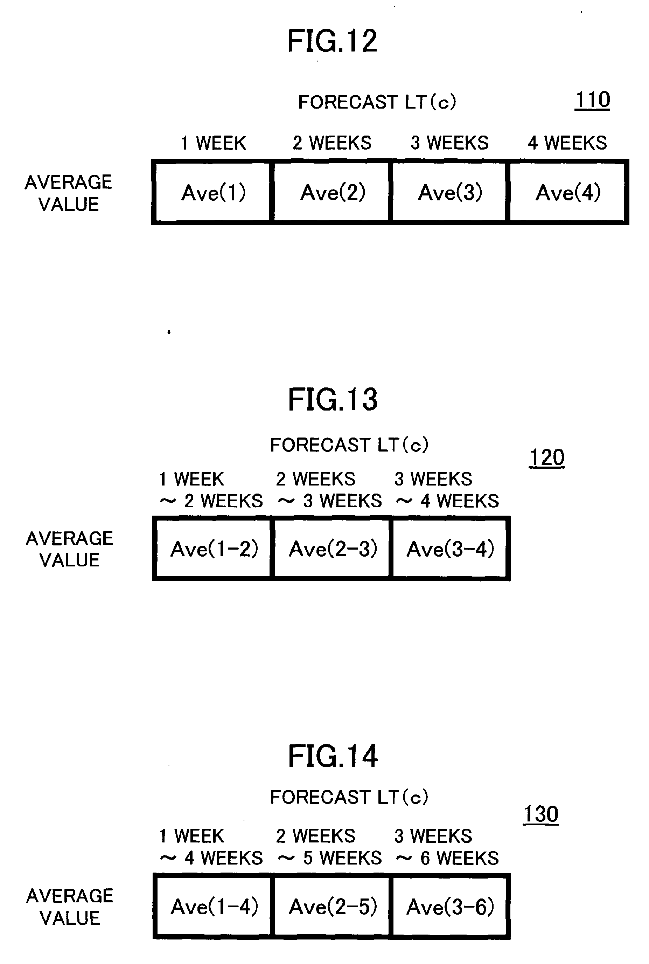

FIG. 12 is an average value table 110 created based on the forecast conversion coefficient table 50 of FIG. 6. It is composed of the average values for individual forecast LTs. More specifically, the average value Ave(1) in the average value table 110 denotes the average value of the values constituting the c=1 column in FIG. 6. Similarly, average values Ave (2), Ave (3) and Ave (4) denote the average values of the values constituting the c=2, c=3, and c=4 columns in the same figure.

FIG. 13 is an average value table 120 created based on the forecast conversion coefficient table 60 of FIG. 7. It is composed of the average values for sets of two consecutive forecast LTs. More specifically, the average value Ave (1-2) in the average value table 120 denotes the average value of the values constituting the c=1 & 2 column in FIG. 7. Similarly, average values Ave(2-3) and Ave(3-4) denote the average values of the values constituting the c=2 & 3 and c=3 & 4 columns in the same figure.

FIG. 14 is an average value table 130 created based on the forecast conversion coefficient table 70 of FIG. 8. It is composed of the average values for sets of four consecutive forecast LTs. More specifically, the average value Ave ( 1-4 ) in the average value table 130 denotes the average value of the values constituting the c=1 to 4 column in FIG. 8. Similarly, average values Ave (2-5) and Ave ( 3-6 ) denote the average values of the values constituting the c=2 to 5 and c=3 to 6 columns in the same figure.

Next, the ratios (s/Ave) of the conversion coefficient standard deviations (s) obtained in Step S3 to the corresponding average values (Ave) obtained in step S4 are calculated, and whether or not the ratios are equal to or less than a predetermined threshold is checked for each forecast LT or set of forecast LTs (Step S5). This is for checking whether the variance of the conversion coefficients of the forecast receive dates is within an allowable range and also for checking whether the error range (absolute value) of the finally obtained forecast value will be within the allowable range.

When the ratio (s/Ave) of a conversion coefficient standard deviation (s) to an average value (Ave) exceeds the threshold, either no definite correlation can be seen between the forecast information and actual order quantity or a definite correlation can be observed therebetween but the resulting error range (absolute value) of the forecast value is large. In such a case, therefore, the procedure is terminated on the judgment that order forecast is impossible or forecast accuracy is insufficient. On the other hand, when the ratio (s/Ave) of a conversion coefficient standard deviation (s) to an average value (Ave) is equal to or less than the threshold, it can be concluded that a definite correlation exists between the forecast information and actual order quantity and that the forecast value error range (absolute value) is sufficiently small. In such a case, therefore, the procedure is continued (goes to the next step explained later) on the judgment that order forecast is possible.

Although the value of the threshold is not particularly limited, it is preferably set to be between 10% and less than 30%, more preferably set to be about 20%. When the threshold is set below 10%, order forecast can be conducted only when the correlation between forecast information and actual order quantity is very strong or when the forecast value error range (absolute value) is very small, so that even cases in which order forecast should be possible are liable to be treated as ones in which forecast is impossible or forecast accuracy is insufficient. On the other hand, when the threshold is set at or higher than 30%, even cases in which the correlation between forecast information and actual order quantity is weak (or substantially nonexistent) or in which the forecast value error range (absolute value) is considerably large come to be treated as subjects of order forecast, so that the forecast results become very inaccurate and, in addition, considerable overstocking is liable to arise when the quantity of stock is decided so as to make the probability of stockout occurrence fall within a predetermined range (such a quantity of stock is called "safe stock quantity" in this specification and is calculated by a method set out later). In contrast, when the threshold is set to around 20%, highly accurate order forecast can be conducted with respect to most cases and overstocking can be thoroughly curbed when actual quantity of stock is decided based on the safe stock quantity.

Since the ratio (s/Ave) and the predetermined threshold are compared for each forecast LT or each set of forecast LTs, it may happen that the ratio (s/Ave) exceeds the threshold only for some of the forecast LTs or some of the sets of forecast LTs. In such a case, it is possible to advance to the next step on the understanding that order forecast is possible only with regard to the forecast LTs or sets of forecast LTs for which the ratio was equal to or less than the threshold. Alternatively, in order to conduct highly accurate order forecast, it is possible to decide that order forecast is impossible unless the ratio (s/Ave) was found to be equal to or less than the threshold for all forecast LTs or all sets of forecast LTs.

Next, the average value table 110 (120, 130) created in step S4 and the latest forecast information 10 are used to conduct an actual forecast order quantity calculation (Step S6). As a rule, the forecast order quantity calculation in Step S6 is carried out by multiplying a scheduled quantity of orders contained in the latest forecast information 10 by the corresponding average value. A specific method of calculating the forecast order quantities will be explained in the following.

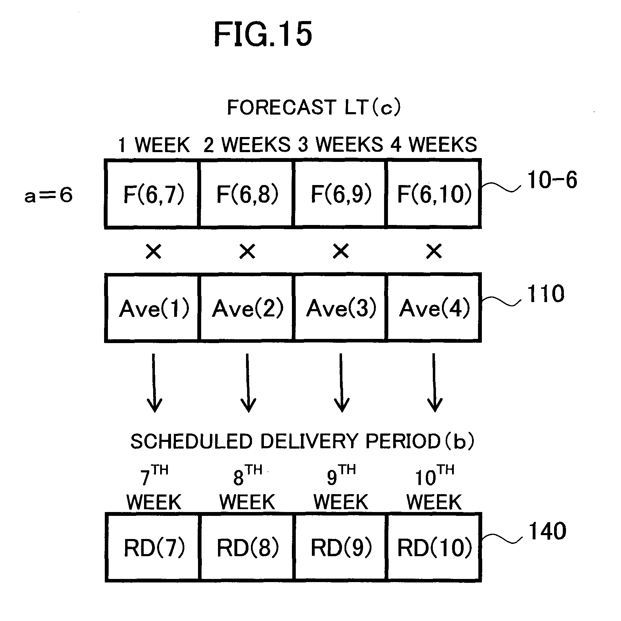

FIG. 15 is a diagram for explaining a method of using the average value table 110 shown in FIG. 12 to calculate forecast order quantities from latest forecast information 10-6. The latest forecast information 10-6 is the forecast information received next after the forecast information 10-5 shown in FIG. 2. Its forecast receive date (a) is week 6 (a=6).

As shown in FIG. 15, the forecast order quantity calculation using the average value table 110 is done by respectively multiplying the required quantity data (F(6,7), F(6,8), F(6,9) and F(6,10)) contained in the latest forecast information 10-6 by the average values (Ave(1) to Ave(4)) of the average value table 110 having the same forecast LTs. For example, the value of the required quantity data F(6, 7) whose forecast LT is 1 week (c=1) is corrected by multiplying it by the average value Ave(1) whose forecast LT is 1 week (c=1) to obtain forecast order quantity RD(7). Similarly, the values of the required quantity data F(6,8), F(6,9) and F(6,10) whose forecast LTs are 2 to 4 weeks (c=2 to 4) are corrected by multiplying them by the corresponding average values Ave(2), Ave(3) and Ave(4) to obtain forecast order quantities RD(8), RD(9) and RD(10). In this way, a forecast order quantity table 140 is created.

The forecast order quantities RD(7) to RD(10) are values obtained by correcting the corresponding required quantity data (F(6,7), F(6,8), F(6,9) and F(6,10)) and can be used as the forecast order quantities for from 1 week after to 4 weeks after the current forecast receive date (a=6). In other words, the forecast order quantity RD(7) can be used as the forecast order quantity at the scheduled delivery date of seventh week (b=7), the forecast order quantity RD(8) can be used as the forecast order quantity at the scheduled delivery date of the eighth week (b=8), the forecast order quantity RD(9) can be used as the forecast order quantity at the scheduled delivery date of the ninth week (b=9), and the forecast order quantity RD(10) can be used as the forecast order quantity at the scheduled delivery date of the tenth week (b=10). These forecast order quantities are values that take into account the correlation between forecast information and actual order quantities for the products (product group) concerned of the customer (or customer group) concerned. The probability of their being closer to the actual quantity of firm orders than the required quantity data contained in the forecast information 10-6 is therefore very high.

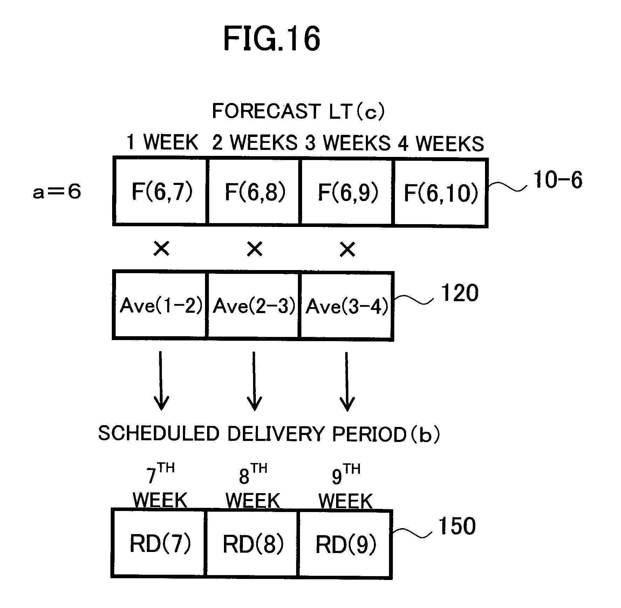

FIG. 16 is a diagram for explaining a preferred method of using the average value table 120 shown in FIG. 13 to calculate forecast order quantities from latest forecast information 10-6. As pointed out earlier, the latest forecast information 10-6 is the forecast information received next after the forecast information 10-5.

As shown in FIG. 16, the forecast order quantity calculation using the average value table 120 is done by respectively multiplying the required quantity data (F(6,7), F(6,8), F(6,9) and F(6,10)) contained in the latest forecast information 10-6 by the average values (Ave(1-2), Ave(2-3) and Ave(3-4)) of the average value table 120 having the same initial forecast LTs. For example, the value of the required quantity data F(6,7) whose initial forecast LT is 1 week (c=1) is corrected by multiplying it by the average value Ave (1-2) whose initial forecast LT is 1 week (c=1) to obtain forecast order quantity RD(7). Similarly, the values of the required quantity data F(6, 8) and F(6, 9) whose initial forecast LTs are 2 weeks and 3 weeks (c=2 & 3) are corrected by multiplying them by the corresponding average values Ave (2-3) and Ave (3-4) to obtain forecast order quantities RD(8) and RD(9). In this way, a forecast order quantity table 150 is created. In this example, a forecast order quantity RD(10) corresponding to the required quantity data F ( 6, 10 ) cannot be obtained because the average value table 120 does not contain an average value whose initial forecast LT is 4 weeks.

The forecast order quantities RD(7) to RD(9) are thus values obtained by correcting the corresponding required quantity data (F (6, 7), F (6, 8) and F ( 6, 9) ) and can be used as the forecast order quantities for from 1 week after to 3 weeks after the current forecast receive date (a=6).

An important point in the correction of the required quantity data is that it involves elements related to forecast LTs that are longer than the forecast LT concerned. For instance, the correction of the required quantity data F(6,7) whose forecast LT is 1 week ( c=1 ) involves not only elements whose forecast LTs are 1 week (c=1) (required quantity data F ( 1, 2 ) , required quantity data F (2, 3) etc.) but also elements whose forecast LTs are 2 weeks (c=2) (required quantity data F(1,3), required quantity data F(2,4) etc.). This means that order forecasts can be made taking into account cases in which previous delivery dates were changed.

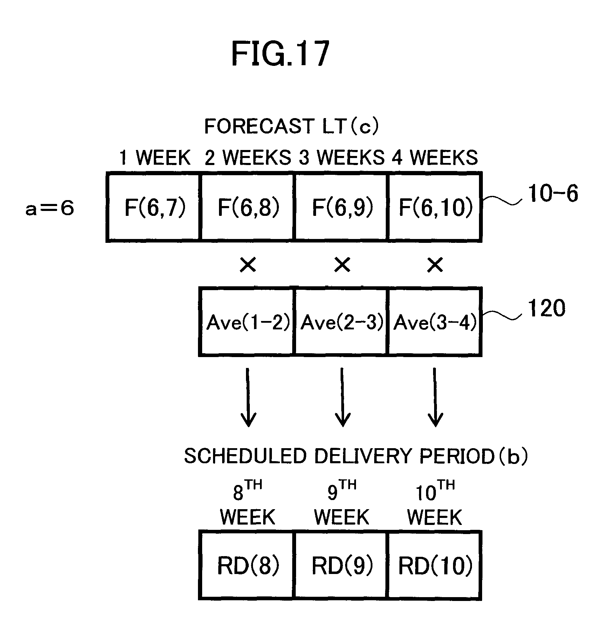

FIG. 17 is a diagram for explaining another method of using the average value table 120 shown in FIG. 13 to calculate forecast order quantities from latest forecast information 10-6.

In the method shown in FIG. 17, differently from that shown in FIG. 16, the correction of the required quantity data involves elements related to forecast LTs that are shorter than the forecast LT concerned. For instance, the correction of the required quantity data F(6,8) whose forecast LT is 2 weeks (c=2) involves not only elements whose forecast LTs are 2 weeks (c=2) (required quantity data F (1, 3), required quantity data F ( 2, 4 ) etc.) but also elements whose forecast LTs are 1 week (c=1) (required quantity data F (1, 2), required quantity data F (2, 3) etc.). Although this method makes it possible to conduct order forecast calculation taking into account cases in which previous delivery dates were changed, it cannot provide a forecast order quantity for the most imminent and important scheduled delivery date (seventh week in this example). In view of this point, order forecast is preferably done using the method shown in FIG. 16.

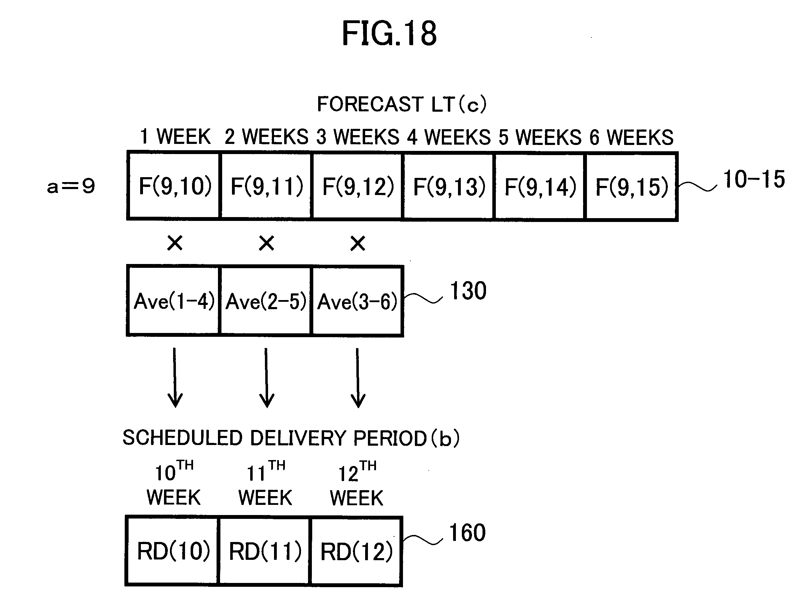

FIG. 18 is a diagram for explaining a preferred method of using the average value table 130 shown in FIG. 14 to calculate forecast order quantities from latest forecast information 10-15. The latest forecast information 10-15 is the forecast information received next after the forecast information 10-14 shown in FIG. 3. Its forecast receive date (a) is week 9 (a=9).

As shown in FIG. 18, the forecast order quantity calculation using the average value table 130 is done by a calculation method similar to that shown in FIG. 16, by respectively multiplying the required quantity data (F(9,10), F (9,11), F(9,12), F(9,13), F(9,14) and F(9,15)) contained in the latest forecast information 10-15 by the average values (Ave(1-4), Ave(2-5) and Ave(3-6)) of the average value table 130 having the same initial forecast LTs. For example, the value of the required quantity data F(9,10) whose initial forecast LT is 1 week (c=1) is corrected by multiplying it by the average value Ave(1-4) whose initial forecast LT is 1 week (c=1) to obtain forecast order quantity RD(10). Similarly, the values of the required quantity data F ( 9, 11 ) and F ( 9, 12 ) whose initial forecast LTs are 2 weeks and 3 weeks (c=2 & 3) are corrected by multiplying them by the corresponding average values Ave(2-5) and Ave(3-6) to obtain forecast order quantities RD(11) and RD(12). In this way, a forecast order quantity table 160 is created. In this example, forecast order quantities RD (13) , RD (14) and RD (15) corresponding to the required quantity data F (9, 13) , F ( 9, 14 ) and F ( 9, 15 ) cannot be obtained because the average value table 130 does not contain average values whose initial forecast LTs are 4 weeks or longer.

An important point in the correction of the required quantity data is that it involves elements related to forecast LTs that are longer than the forecast LT concerned. Thus, the order forecasts can be made taking into account cases in which previous delivery dates were changed.

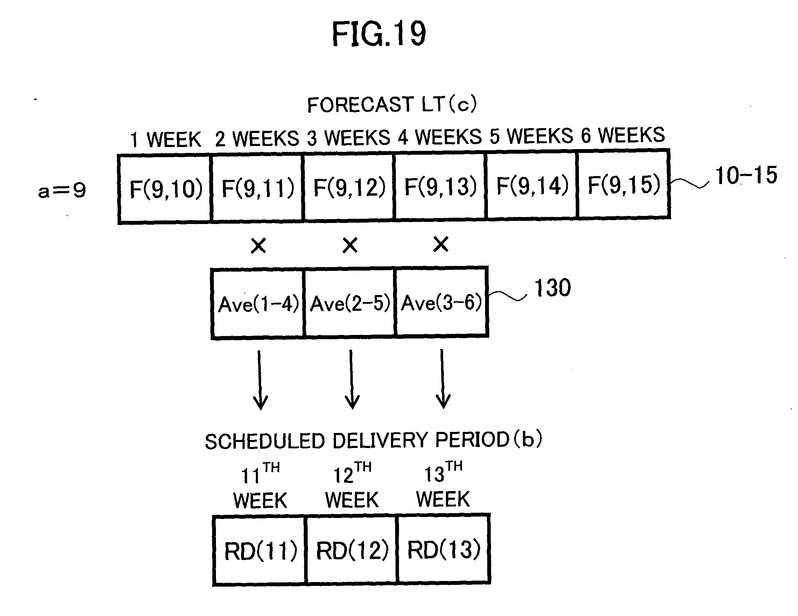

FIG. 19 is a diagram for explaining another method of using the average value table 130 shown in FIG. 14 to calculate forecast order quantities from latest forecast information 10-15.

In the method shown in FIG. 19, which is similar to that shown in FIG. 17, the correction of the required quantity data involves elements related to forecast LTs that are longer than the forecast LT concerned and elements related to forecast LTs that are shorter than the forecast LT concerned. For instance, the correction of the required quantity data F (9, 11) whose forecast LT is 2 weeks (c=2) involves not only elements whose forecast LTs are 2 weeks (c=2) (required quantity data F(1, 3) etc.) but also elements whose forecast LTs are 1 week (c=1) (required quantity data F (1, 2) etc.) and elements whose forecast LTs are 3 weeks (c=3) and 4 weeks (c=4) (required quantity data F(1,4), required quantity data F(1,5) etc.). Although this method also makes it possible to conduct order forecast calculation taking into account cases in which previous delivery dates were changed, it cannot provide a forecast order quantity for the most imminent and important scheduled delivery date (tenth week in this example). In view of this point, order forecast is preferably done using the method shown in FIG. 18.

When the forecast order quantity calculation is complete (Step S6) , a margin calculation is next conducted (Step S7). By "margin" is meant an extra quantity added on top of the forecast order quantity RD calculated in Step S6 to ensure against stockout. The establishment of such margins is desirable because the forecast order quantities (RD) calculated in Step S6 are only estimates, so that an unavoidable error is likely to arise between each the actual quantity in the firm orders. If the stock level should be set strictly at the number indicated by the forecast order quantities (RD), therefore, a stockout will occur immediately upon the actual quantity in the firm orders exceeding the corresponding forecast order quantity (RD). To prevent this, a certain quality has to be added on top of each forecast order quantity (RD). This extra quantity is called a "margin" in this specification. In this embodiment, the forecast information and the like are also used in the calculation of the margins. As a result, the probability of a stockout can be confined to within a certain range while also minimizing overstocking.

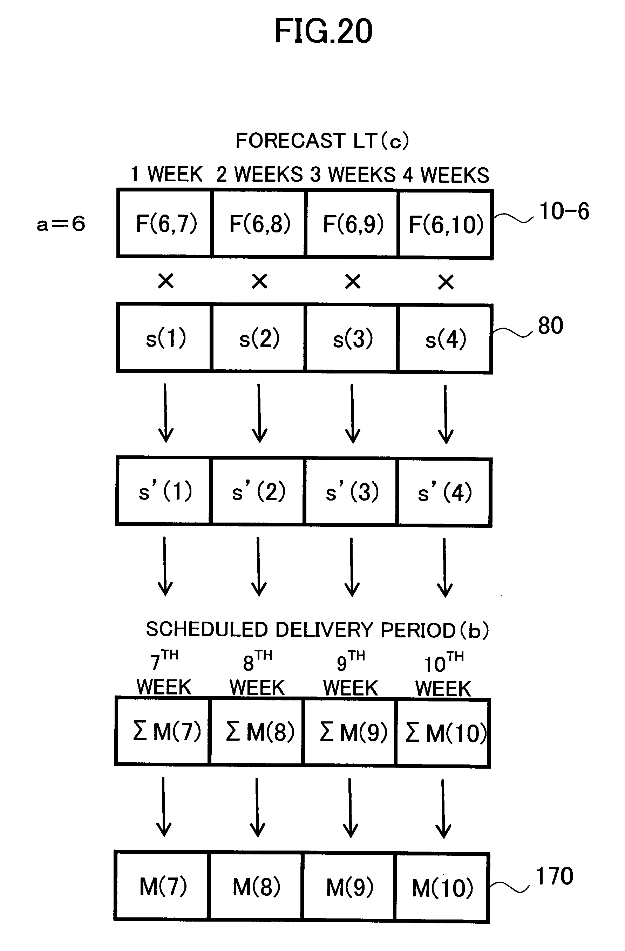

FIG. 20 is a diagram for explaining a method of using the standard deviation table 80 shown in FIG. 9 to calculate margins from latest forecast information 10-6.

As shown in FIG. 20, in the calculation of margins using the standard deviation table 80, first, the required quantity data (F(6,7), F(6,8), F(6,9) and F(6,10)) contained in the latest forecast information 10-6 are respectively multiplied by the conversion coefficient standard deviations (s(1) to s(4)) of the standard deviation table 80 having the same forecast LTs. For example, the required quantity data F(6,7) whose forecast LT is 1 week (c=1) is multiplied by the conversion coefficient standard deviation s(1) whose forecast LT is 1 week (c=1). The obtained values are defined as forecast order quantity standard deviations s' (1) to s'(4).

Next, each of the forecast order quantity standard deviations s' ( 1 ) to s' ( 4 ) is substituted into Equation (1) set out below to obtain cumulative margins $\Sigma M$ (7) to $\Sigma M$ (10). The cumulative margins $\Sigma M$ (7) to $\Sigma M$ (10) are cumulative values of the margins up to the scheduled delivery date. In other words, cumulative margin $\Sigma M$ (7) is the margin at the scheduled delivery date of week 7 (b=7), cumulative margin $\Sigma M$ (8) is the sum of margins up to the scheduled delivery date of week 8 (b=8), cumulative margin $\Sigma M$ (9) is the sum of margins up to the scheduled delivery date of week 9 (b=9), and cumulative margin $\Sigma M$ (10) is the sum of margins up to the scheduled delivery date of week 10 (b=10).

[formula 1]

$$\Sigma M(b) = k \times \sqrt{s'(c)^2 + s'(c-1)^2 + s'(c-2)^2 + \bullet\bullet\bullet} \qquad \cdots (1)$$

In Equation (1), "c" is forecast LT and "b" is corresponding scheduled delivery date. The cumulative margins $\Sigma M$ are therefore calculated using not only the forecast order quantity standard deviation corresponding to the forecast LT concerned but forecast order quantity standard deviations corresponding to shorter forecast LTs. This kind of calculation is used to take the additivity of variance into account. Therefore, the cumulative margin $\Sigma M$ (7) is given by Equation (2):

[formula 2]

$$\Sigma M(7) = k \times \sqrt{s'(1)^2} \qquad \cdots (2)$$

the cumulative margin $\Sigma M$ (8) is given by Equation (3):

[formula 3]

$$\Sigma M(8) = k \times \sqrt{s'(2)^2 + s'(1)^2} \qquad \cdots (3)$$

the cumulative margin ΣM (9) is given by Equation (4):
[formula 4]

$$\Sigma M(9) = k \times \sqrt{s'(3)^2 + s'(2)^2 + s'(1)^2} \qquad \cdots (4)$$

; and
the cumulative margin ΣM (10) is given by Equation (5):
[formula 5]

$$\Sigma M(10) = k \times \sqrt{s'(4)^2 + s'(3)^2 + s'(2)^2 + s'(1)^2} \qquad \cdots (5)$$

Here, "k" is a constant determined by the acceptable stockout rate. It is obtained from the probability density function assuming the dispersion has a normal distribution. For example, when the allowable stockout rate is set at 1%, k=2.32, when set at 2.5%, k=1.96, when set at 5%, k=1.65, and when set at 10%, k=1.28.
Thus the cumulative margins ΣM (7) to ΣM (10) obtained in the foregoing manner are cumulative values of the margins up to the scheduled delivery date. Therefore, the margins for the individual scheduled delivery dates (or scheduled delivery periods) can be calculated by subtracting from each the cumulative margin corresponding to the preceding scheduled delivery date. That is, the margins M(7) to M(10) for the respective scheduled delivery dates (or scheduled delivery periods) can be calculated according to Equation (6):
[formula 6]

$$M(b) = \Sigma M(b) - \Sigma M(b-1) \qquad \cdots (6)$$

In other words, margin M (7) is the margin at the scheduled delivery date of week 7 (b=7), margin M(8) is the margin at the scheduled delivery date of week 8 (b=8), margin M (9) is the margin at the scheduled delivery date of week 9 (b=9), and margin M(10) is the margin at the scheduled delivery date of week 10 (b=10).
The margins M(7) to M(10) obtained in this manner represent the quantities of products that should be added on top of the corresponding forecast order quantities RD at the respective scheduled delivery dates (scheduled delivery periods) in order to keep the probability of stockout within a predetermined range. In this way, a margin table 170 is created.

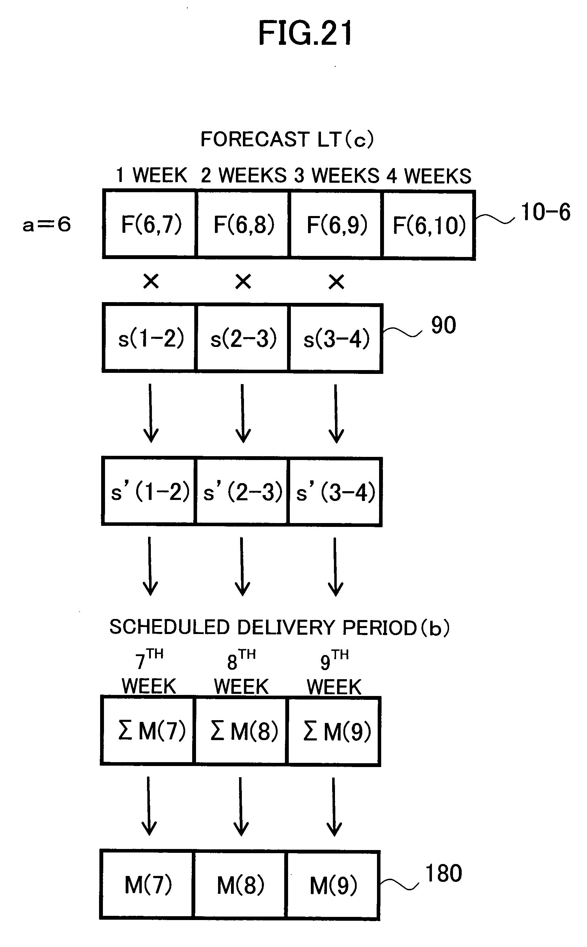

FIG. 21 is a diagram for explaining a preferred method of using the standard deviation table 90 shown in FIG. 10 to calculate forecast order quantities from the latest forecast information 10-6.

As shown in FIG. 21, in the calculation of margins using the standard deviation table 90, first, the required quantity data (F(6,7), F(6,8), F(6,9) and F(6,10)) contained in the latest forecast information 10-6 are respectively multiplied by the conversion coefficient standard deviations ( s ( 1-2 ), s(2-3) and s(3-4)) of the standard deviation table 90 having the same initial forecast LTs. In this aspect, the method of calculating forecast order quantities is similar to that of FIG. 16. The calculation provides forecast order quantity standard deviations s' ( 1-2 ), s'(2-3) and s'(3-4).

Next, the forecast order quantity standard deviations s' ( 1-2 ), s'(2-3) and s'(3-4) are substituted into Equation (1) to calculate cumulative margins ΣM (7) to ΣM (9). Then, the margins M(7) to M(9) are calculated in accordance with Equation (6) by subtracting from the cumulative margin corresponding to each scheduled delivery date the cumulative margin corresponding to the preceding scheduled delivery date. In this way, a margin table 180 is created. In this example, a margin M (4) corresponding to week 4 (b=4) cannot be obtained because the standard deviation table 90 does not contain an average value whose initial forecast LT is 4 weeks.

Although not shown in the drawings, if, by a method of calculating forecast order quantities similar to that of FIG. 17, the required quantity data (F(6,7), F(6,8), F(6,9) and F(6,10)) contained in the latest forecast information 10-6 are respectively multiplied by the conversion coefficient standard deviations (s ( 1-2 ), s(2-3) and s(3-4)) of the standard deviation table 90 having the same initial forecast LTs, it then becomes possible to calculate the margins M(8) to M(10). However, caution is necessary regarding this method because, as was pointed out earlier, it cannot provide a margin for the most imminent and important scheduled delivery date (seventh week in this example).

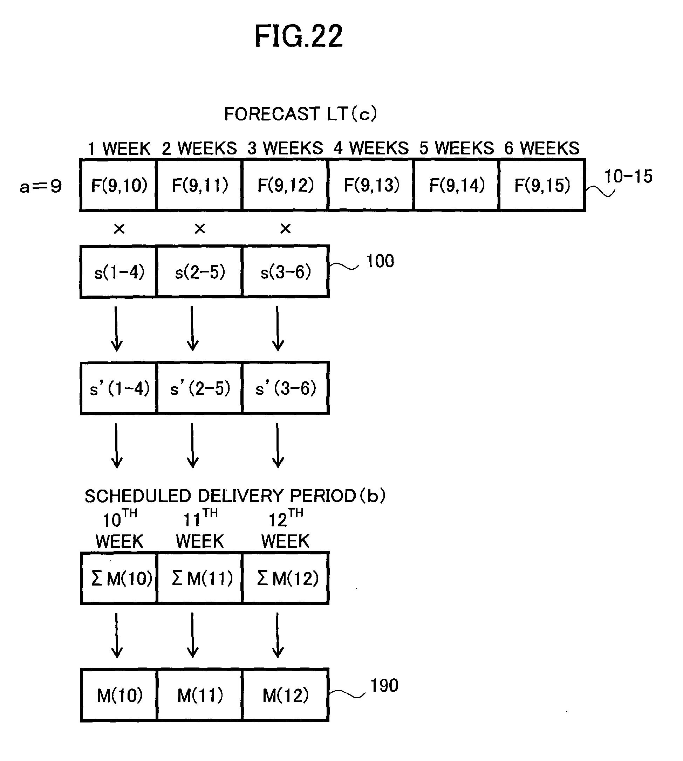

FIG. 22 is a diagram for explaining a preferred method of using the standard deviation table 100 shown in FIG. 11 to calculate forecast order quantities from the latest forecast information 10-5.

As shown in FIG. 22, calculation of margins using the standard deviation table 100 is done by a calculation method similar to that shown in FIG. 21, by respectively multiplying the required quantity data (F(9, 10), F(9, 11), F(9,12), F(9,13), F(9,14) and F(9,15)) contained in the latest forecast information 10-15 by the conversion coefficient standard deviations (s ( 1-4 ), s(2-5) and s ( 3-6 ) ) of the standard deviation table 100 having the same initial forecast LTs. The calculation provides forecast order quantity standard deviations s' ( 1-4 ), s'(2-5) and s' (3-6) .

Next, the forecast order quantity standard deviations s' (1-4), s' (2-5) and s' (3-6) are substituted into Equation (1)' to calculate cumulative margins ΣM (10) to ΣM (12). Then, the margins M(10) to M(12) are calculated in accordance with Equation (6) by subtracting from the cumulative margin corresponding to each scheduled delivery date the cumulative margin corresponding to the preceding scheduled delivery date. In this way, a margin table 190 is created. In this example, margins M(13), M(14) and M(15) corresponding to required quantity data F(9,13), F(9,14) and F(9,15) cannot be obtained because the standard deviation table 100 does not contain average values whose initial forecast LTs are 4 week or longer.

Although not shown in the drawings, if, by a method of calculating forecast order quantities similar to that of FIG. 19, the required quantity data (F(9,10), F(9,11), F(9,12), F(9,13), F(9,14) and F(9,15)) contained in the latest forecast information 10-5 are respectively multiplied by the conversion coefficient standard deviations (s ( 1-4 ), s(2-5) and s(3-6)) of the standard deviation table 100 having the same initial forecast LTs, it then becomes possible to calculate the margins M(11) to M(13). However, caution is necessary regarding this method because, as was pointed out earlier, it cannot provide a margin for the most imminent and important scheduled delivery date (tenth week in this example).

When the margin calculation is complete (Step S7), a safe stock quantity calculation is next conducted (Step S8). As mentioned earlier, a safe stock quantity is a stock quantity that brings the probability of stockout (stockout rate) within a predetermined range (e.g., within 5%). In Step S8, safe stock quantities are calculated by adding the margins obtained in Step S7 to the forecast order quantities obtained in Step S6.

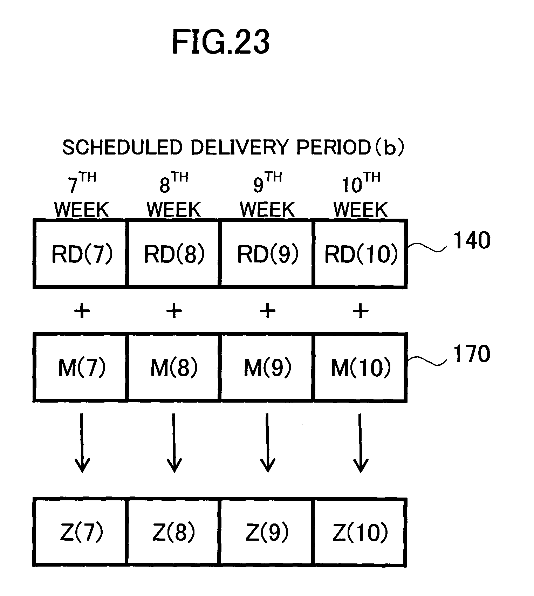

FIG. 23 is diagram for explaining a method of calculating safe stock quantities from the forecast order quantity table 140 shown in FIG. 15 and the margin table 170 shown in FIG. 20.

As shown in FIG. 23, the safe stock quantities are calculated by adding to the forecast order quantities (RD(7) to RD(10)) contained in the forecast order quantity table 140, the margins (M(7) to M(10)) of the margin table 170 having the same scheduled delivery dates (or scheduled delivery periods). This increments the forecast order quantities at the respective scheduled delivery dates (or scheduled delivery periods) by the amount of the margins to provide safe stock quantities Z(7) to Z(10) at the respective scheduled delivery dates (or scheduled delivery periods).

The safe stock quantities Z(7) to Z(10) obtained in this way are values that take into account the allowable stockout rate in addition to the forecast order quantities (RD) and the forecast order quantity standard deviations (s'). Therefore, by planning production so as make the quantity of stock at the respective scheduled delivery dates (or scheduled delivery periods) equal to the corresponding safe stock quantities (Z), the supplier can restrict the probability of stockout occurring at the respective scheduled delivery dates (or scheduled delivery periods) to within a certain range while also minimizing overstocking.

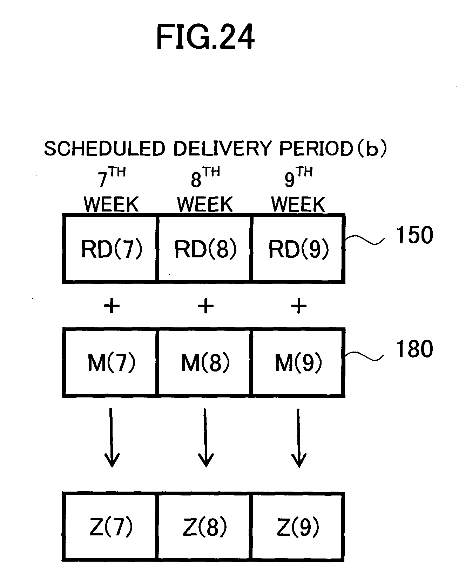

FIG. 24 is diagram for explaining a method of calculating safe stock quantities from the forecast order quantity table 150 shown in FIG. 16 and the margin table 180 shown in FIG. 21.

Similarly to the foregoing, the safe stock quantities are calculated by adding to the forecast order quantities (RD (7) to RD (9) ) contained in the forecast order quantity table 150, the margins (M (7) to M (9) ) of the margin table 180 having the same scheduled delivery dates (or scheduled delivery periods). This provides safe stock quantities Z(7) to Z(9) at the respective scheduled delivery dates (or scheduled delivery periods). Since the safe stock quantities Z (7) to Z (9) obtained in this manner are values that take into account cases in which previous delivery dates were changed, the probability of overstocking is reduced.

Although not shown in the drawings, in the case of calculating the forecast order quantities (RD(8) to RD(10)) by the method shown in FIG. 17, safe stock quantities Z (8) to Z (10) can be obtained by adding margins M(8) to M(10) thereto. The method of calculating the margins M(8) to M(10) was explained earlier. However, caution is necessary regarding this method because it cannot provide a safe stock quantity for the most imminent and important scheduled delivery date (seventh week in this example).

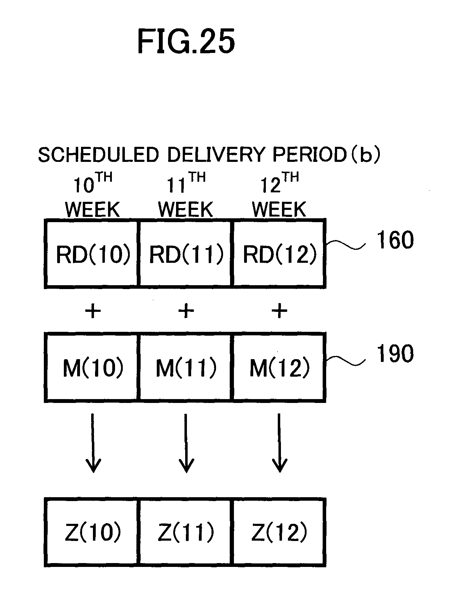

FIG. 25 is diagram for explaining a method of calculating safe stock quantities from the forecast order quantity table 160 shown in FIG. 18 and the margin table 190 shown in FIG. 22.

Similarly to the foregoing, the safe stock quantities are calculated by adding to the forecast order quantities (RD(10) to RD(12)) contained in the forecast order quantity table 160, the margins (M(10) to M(12)) of the margin table 190 having the same scheduled delivery dates (or scheduled delivery periods). This provides safe stock quantities Z (10) to Z(12) at the respective scheduled delivery dates (or scheduled delivery periods). Since the safe stock quantities Z(10) to Z(12) obtained in this manner are also values that take into account cases in which previous delivery dates were changed, the probability of overstocking is further reduced.

Although not shown in the drawings, in the case of calculating the forecast order quantities (RD(11) to RD(13)) by the method shown in FIG. 19, safe stock quantities Z (11) to Z(13) can be obtained by adding margins M(11) to M (13) thereto. The method of calculating the margins M(11) to M(13) was explained earlier. However, caution is necessary regarding this method because it cannot provide a safe stock quantity for the most imminent and important scheduled delivery date (tenth week in this example).

This concludes the explanation of the preferred embodiment of the order forecast method according to the present invention.

Next, an order forecast system for implementing the order forecast procedures described in the foregoing will be explained.

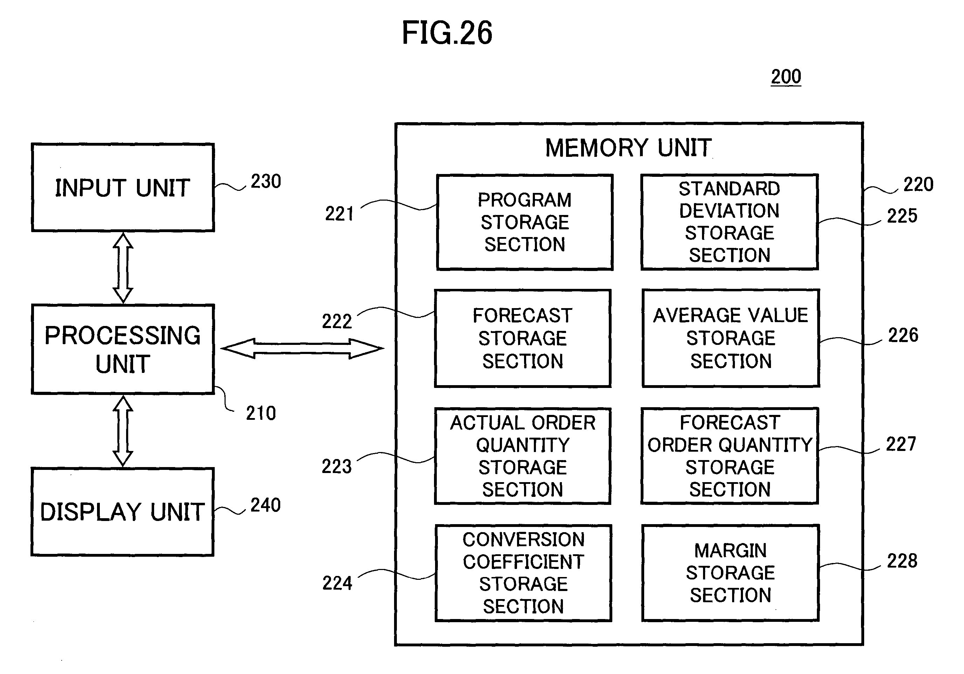

FIG. 26 is a block diagram showing the structure of an order forecast system 200 according to a preferred embodiment of the present invention.

As shown in FIG. 26, the order forecast system 200 of this embodiment comprises a processing unit 210 for controlling the overall operation of the order forecast system 200, a memory unit 220 for storing data and the like to be explained later, an input unit 230 for inputting data required for order forecast, an a display unit 240 for displaying order forecast results. The memory unit 220 is equipped with a program storage section 221 for storing an order forecast program, a forecast storage section 222 for storing a forecast transition table (20, 30) , an actual order quantity storage section 223 for storing an actual order table (40), a conversion coefficient storage section 224 for storing a forecast conversion coefficient table (50, 60, 70), a standard deviation storage section 225 for storing a standard deviation table (80, 90, 100), an average value storage section 226 for storing an average value table (110, 120, 130), a forecast order quantity storage section 227 for storing a forecast order quantity table (140, 150, 160), and a margin storage section 228 for storing a margin table (170, 180, 190) . The sections 221 to 228 are not required to be independent physical devices but can be constituted by allotting to each an area of the recording region (s) of one or more recording devices (hard disk drives, semiconductor memories or the like). The assigned area may change dynamically.

The order forecast program stored in the program storage section 221 is for operating the processing unit 210 to execute the procedure shown in FIG. 5. When an operator inputs forecast information and actual order quantity data through the input unit 230, the processing unit 210 executes the procedures shown in FIG. 5 in accordance with the order forecast program stored in the program storage section 221. These procedures were set out in the earlier description and will not be explained again here. The forecast order quantities and safe stock quantities obtained as a result of the processing are displayed on the display unit 240, whereby the operator can check forecast order quantity for each scheduled delivery date (or scheduled delivery period) and can also check the safe stock quantity for each scheduled delivery date (or scheduled delivery period).

Instead of using forecast information and actual order quantity data input by the operator through the input unit 230, it is possible to use raw information/data received from the customer by EDI (Electronic Data Interchange). In this case, a configuration can be utilized that automatically activates the order forecast program to automatically conduct an order forecast every time new forecast information is received online.

As explained above, the foregoing embodiments are configured to utilize forecast information and corresponding actual order quantity data received in the past to analyze the correlation between the forecast information and quantity of orders for each customer (or customer group) and each product (product group) and to utilize the result of the analysis to make order forecasts. The probability of the obtained numerical values being close to the actual quantities of firm orders is therefore very high. The fact that the order forecasts can be made with high accuracy works in turn to reduce the risks of speculative production (risk of not being able to meet delivery date because of stockout and risk of stagnant inventory). Moreover, this embodiment does not stop with calculating forecast order quantity but goes a step further to calculate the safe stock quantity, thereby making it possible to hold the probability of stockout occurring at the respective scheduled delivery dates (or scheduled delivery periods) to within a predetermined range while also minimizing overstocking.

Of particular note is that when the forecast conversion coefficient table is created with the number of combined forecast LTs (=e) set at 2 or more, especially at around 4, the risks involved in speculative production can be still further diminished because the order forecast can be made taking into account cases in which previous delivery dates were changed.

The present invention is in no way limited to the aforementioned embodiments, but rather various modifications are possible within the scope of the invention as recited in the claims, and naturally these modifications are included within the scope of the invention.

In the foregoing embodiments, the feasibility of conducting an order forecast is decided based on whether or not the ratio (s/Ave) of the conversion coefficient standard deviation (s) to the corresponding average value (Ave) of the conversion coefficients is equal to or less than a predetermined threshold (see Step S5 in FIG. 5). However, the invention is not limited to this method. For example, it is possible to use the standard deviation of the conversion coefficients as a parameter and decide that order forecast is impossible when the parameter exceeds a threshold. When this criterion is adopted, although forecasts come to be made even with respect to cases in which the error range (absolute value) of the forecast value is relatively large, the decision whether or not an order forecast is feasible can be made with focus entirely on the correlation between the forecast information and the actual order quantity data. In this case, it is acceptable to calculate the average value after deciding whether or not the conversion coefficient standard deviation is equal to or less than the threshold.

In the case of forecast information that is missing a required quantity for a scheduled delivery date (or scheduled delivery period), the corresponding cell of the forecast conversion coefficient table can be left blank. Or a required quantity corresponding to the same scheduled delivery date (or scheduled delivery period) contained in forecast information received one time earlier or one time later can be used as substitute data. Further, when the number of combined forecast LTs (=e) is 2 or more (see FIGs. 7 and 8), the ratio of the average value of the required quantity data to the average value of the actual order quantity data can be used as the conversion coefficient.

In calculating the average value of conversion coefficients, a conversion coefficient whose value differs greatly from the others (which has an abnormal value) can be eliminated from the calculation. Abnormality can be judged with reference to the standard deviation of the conversion coefficients. For instance, if the difference with respect to the average value obtained when the conversion coefficient considered abnormal is included is twice or more the standard deviation of the conversion coefficients, the conversion coefficient concerned can be treated as abnormal.

As explained in the foregoing, in the present invention, the correlation between forecast information and actual quantity of orders is analyzed for each customer (or customer group) and each product (product group), and the result of the analysis is used to calculate a forecast order quantity and a safe stock quantity. Since the order forecast can therefore be conducted with high accuracy, the risk of the supplier in speculative production can be reduced.

BRIEF DESCRIPTION OF THE DRAWINGS

[FIG. 1] FIG. 1 shows the data structure of ordinary forecast information.
[FIG. 2] FIG. 2 shows an example of a forecast transition table.
[FIG. 3] FIG. 3 shows another example of a forecast transition table.
[FIG. 4] FIG. 4 shows the structure of an actual order table.
[FIG. 5] FIG. 5 is a flow chart showing an order forecast method that is a preferred embodiment of the present invention.
[FIG. 6] FIG. 6 shows an example of a forecast conversion coefficient table.
[FIG. 7] FIG. 7 shows another example of a forecast conversion coefficient table.
[FIG. 8] FIG. 8 shows still another example of a forecast conversion coefficient table.
[FIG. 9] FIG. 9 shows an example of a standard deviation table.
[FIG. 10] FIG. 10 shows another example of a standard deviation table.
[FIG. 11] FIG. 11 shows still another example of a standard deviation table.
[FIG. 12] FIG. 12 shows an example of an average value table.
[FIG. 13] FIG. 13 shows another example of an average value table.
[FIG. 14] FIG. 14 shows still another example of an average value table.
[FIG. 15] FIG. 15 is a diagram for explaining a method of using the average value table shown in FIG. 12 to calculate

EP 1 640 897 A1

forecast order quantities from latest forecast information.

[FIG. 16] FIG. 16 is a diagram for explaining a method of using the average value table shown in FIG. 13 to calculate forecast order quantities from latest forecast information.

[FIG. 17] FIG. 17 is a diagram for explaining another method of using the average value table shown in FIG. 13 to calculate forecast order quantities from latest forecast information.

[FIG. 18] FIG. 18 is a diagram for explaining a method of using the average value table shown in FIG. 14 to calculate forecast order quantities from latest forecast information.

[FIG. 19] FIG. 19 is a diagram for explaining another method of using the average value table shown in FIG. 14 to calculate forecast order quantities from latest forecast information.

[FIG. 20] FIG. 20 is a diagram for explaining a method of using the standard deviation table shown in FIG. 9 to calculate margins from latest forecast information.

[FIG. 21] FIG. 21 is a diagram for explaining a method of using the standard deviation table shown in FIG. 10 to calculate margins from latest forecast information.

[FIG. 22] FIG. 22 is a diagram for explaining a method of using the standard deviation table shown in FIG. 11 to calculate margins from latest forecast information.

[FIG. 23] FIG. 23 is diagram for explaining a method of calculating safe stock quantities from the forecast order quantity table shown in FIG. 15 and the margin table shown in FIG. 20.

[FIG. 24] FIG. 24 is diagram for explaining a method of calculating safe stock quantities from the forecast order quantity table shown in FIG. 16 and the margin table shown in FIG. 21.

[FIG. 25] FIG. 25 is diagram for explaining a method of calculating safe stock quantities from the forecast order quantity table shown in FIG. 18 and the margin table shown in FIG. 22.

[FIG. 26] FIG. 26 is a block diagram showing the structure of an order forecast system according to a preferred embodiment of the present invention.

[FIG. 27] FIG. 27 shows an example of the time relationship between order receipt and production.

[FIG. 28] FIG. 28 shows another example of the time relationship between order receipt and production.

[FIG. 29] FIG. 29 shows still another example of the time relationship between order receipt and production.

EXPLANATIONS OF LETTERS OR NUMERALS

10 forecast information
11 unit data packet
12 scheduled delivery date (or scheduled delivery period)
13 required quantity
20, 30 forecast transition table
21 to 25, 31 to 34 the sets of required quantity data
40 actual order table
50, 60, 70 forecast conversion coefficient table
51, 52, 61 to 65, 71 to 74 cell
80, 90, 100 standard deviation table
110, 120, 130 average value table
200 order forecast system
210 processing unit
220 memory unit
221 program storage section
222 forecast storage section
223 actual order quantity storage section
224 conversion coefficient storage section
225 standard deviation storage section
226 average value storage section
230 input unit
240 display unit

**Claims**

1. An order forecast system for deciding safe stock quantities based on forecast information indicating required quantities for a plurality of scheduled delivery dates or scheduled delivery periods, which system comprises:

a forecast storage section for storing a plurality of sets of past forecast information having different receive dates; an actual order quantity storage section for storing actual order quantities for each delivery date or delivery period; and a processing unit for using the past forecast information stored in the forecast storage section and the actual order quantities stored in the actual order quantity storage section to calculate the safe stock quantities by correcting required quantities in new sets of forecast information for which forecasts are to be made,

wherein the processing unit calculates a plurality of conversion coefficients that are ratios of one or more required quantities contained in the sets of past forecast information to one or more corresponding actual order quantities; calculates a standard deviation of the conversion coefficients whose forecast lead times, defined as a period between forecast receive date and scheduled delivery date, are the same;

judges a forecast lead time whose standard deviation or a value derived therefrom does not exceed a predetermined threshold to be a valid forecast lead time;

calculates a forecast quantity of orders for each scheduled delivery date or scheduled delivery period by performing an arithmetic operation using, among the required quantities contained in the new sets of forecast information, those that correspond to the valid forecast lead times, and the conversion coefficients corresponding thereto;

calculates a margin for each scheduled delivery date or scheduled delivery period by performing an arithmetic operation using, among the required quantities contained in the new sets of forecast information, those that correspond to the valid forecast lead times, and the standard deviation of the conversion coefficients corresponding thereto; and

calculates the safe stock quantities for each scheduled delivery date or scheduled delivery period by adding to the forecast quantity of orders for each scheduled delivery date or scheduled delivery period the margin corresponding thereto.

2. The order forecast system as claimed in claim 1,
wherein the forecast quantity of orders is calculated by multiplying a required quantity contained in the new forecast information by an average value of a plurality of corresponding conversion coefficients.

3. The order forecast system as claimed in claim 1,
wherein the conversion coefficients are calculated as a ratio of two or more required quantities among the required quantities contained in the past forecast information whose forecast lead times are consecutive to two or more corresponding actual order quantities.

4. The order forecast system as claimed in claim 2,
wherein the conversion coefficients are calculated as a ratio of two or more required quantities among the required quantities contained in the past forecast information whose forecast lead times are consecutive to two or more corresponding actual order quantities.

5. The order forecast system as claimed in claim 3,
wherein the conversion coefficient is treated as the conversion coefficient corresponding to the forecast lead time among the two or more consecutive forecast lead times whose period is shortest.

6. The order forecast system as claimed in claim 4,
wherein the conversion coefficient is treated as the conversion coefficient corresponding to the forecast lead time among the two or more consecutive forecast lead times whose period is shortest.

7. The order forecast system as claimed in claim 1,
wherein a forecast lead time whose ratio of standard deviation to an average value of a plurality of conversion coefficients corresponding thereto does not exceed a predetermined threshold is judged to be a valid forecast lead time.

8. The order forecast system as claimed in claim 2,
wherein a forecast lead time whose ratio of standard deviation to an average value of a plurality of conversion coefficients corresponding thereto does not exceed a predetermined threshold is judged to be a valid forecast lead time.

9. The order forecast system as claimed in claim 3,

wherein a forecast lead time whose ratio of standard deviation to an average value of a plurality of conversion coefficients corresponding thereto does not exceed a predetermined threshold is judged to be a valid forecast lead time.

10. The order forecast system as claimed in claim 4,
wherein a forecast lead time whose ratio of standard deviation to an average value of a plurality of conversion coefficients corresponding thereto does not exceed a predetermined threshold is judged to be a valid forecast lead time.

11. The order forecast system as claimed in claim 5,
wherein a forecast lead time whose ratio of standard deviation to an average value of a plurality of conversion coefficients corresponding thereto does not exceed a predetermined threshold is judged to be a valid forecast lead time.

12. The order forecast system as claimed in claim 6,
wherein a forecast lead time whose ratio of standard deviation to an average value of a plurality of conversion coefficients corresponding thereto does not exceed a predetermined threshold is judged to be a valid forecast lead time.

13. The order forecast system as claimed in claim 1,
wherein the margin for a scheduled delivery date or scheduled delivery period is calculated by multiplying required quantity data contained in the new forecast information by a corresponding conversion coefficient standard deviation to obtain an order quantity standard deviation; calculating a cumulative margin for the scheduled delivery date or scheduled delivery period based on the forecast order quantity standard deviation and an allowable stockout rate; and subtracting from the cumulative margin for the scheduled delivery date or scheduled delivery period a cumulative margin corresponding to the preceding scheduled delivery date or scheduled delivery period.

14. The order forecast system as claimed in claim 13,
wherein the cumulative margin for a scheduled delivery date or scheduled delivery period is calculated by adding a value obtained by squaring the forecast order quantity standard deviation corresponding to the predetermined scheduled delivery date or scheduled delivery period to a value obtained by squaring the forecast order quantity standard deviation corresponding to the scheduled delivery date or scheduled delivery period preceding the predetermined scheduled delivery date or scheduled delivery period; and multiplying the square root of the value obtained by the addition by a constant based on a stockout rate.

15. An order forecast method for deciding safe stock quantities based on forecast information indicating required quantities for a plurality of scheduled delivery dates or scheduled delivery periods, which method comprises:

storing a plurality of sets of past forecast information having different receive dates in a forecast storage section;
storing actual order quantities for each delivery date or delivery period in an actual order quantity storage section;
calculating a plurality of conversion coefficients that are ratios of one or more required quantities contained in the sets of past forecast information stored in the forecast storage section to one or more corresponding actual order quantities among the actual order quantities stored in the actual order quantity storage section;
calculating a standard deviation of the conversion coefficients whose forecast lead times, defined as the period between forecast receive date and scheduled delivery date, are the same;
judging a forecast lead time whose standard deviation or a value derived therefrom does not exceed a predetermined threshold to be a valid forecast lead time;
calculating a forecast quantity of orders for each scheduled delivery date or scheduled delivery period by performing an arithmetic operation using, among the required quantities contained in the new sets of forecast information, those that correspond to the valid forecast lead times, and the conversion coefficients corresponding thereto;
calculating a margin for each scheduled delivery date or scheduled delivery period by performing an arithmetic operation using, among the required quantities contained in the new sets of forecast information, those that correspond to the valid forecast lead times, and the standard deviation of the conversion coefficients corresponding thereto; and
calculating the safe stock quantities for each scheduled delivery date or scheduled delivery period by adding to the forecast quantity of orders for each scheduled delivery date or scheduled delivery period the margin corresponding thereto.

**16.** An order forecast program for causing a computer to execute:

a step of calculating a plurality of conversion coefficients that are ratios of one or more required quantities contained in sets of past forecast information to one or more corresponding actual order quantities;

a step of calculating a standard deviation of the conversion coefficients whose forecast lead times, defined as the period between forecast receive date and scheduled delivery date, are the same;

a step of, for each forecast lead time, comparing the standard deviation or a value derived therefrom with a predetermined threshold and judging the forecast lead time to be a valid forecast lead time if the threshold is not exceeded;

a step of performing an arithmetic operation using, among the required quantities contained in the new sets of forecast information, those that correspond to the valid forecast lead times, and the conversion coefficients corresponding thereto, thereby calculating a forecast quantity of orders for each scheduled delivery date or scheduled delivery period;

a step of performing an arithmetic operation using, among the required quantities contained in the new sets of forecast information, those that correspond to the valid forecast lead times, and the standard deviation of the conversion coefficients corresponding thereto, thereby calculating a margin for each scheduled delivery date or scheduled delivery period; and

a step of calculating safe stock quantities for each scheduled delivery date or scheduled delivery period by adding to the forecast quantity of orders for each scheduled delivery date or scheduled delivery period the margin corresponding thereto.

# FIG.1

| SCHEDULED DELIVERY DATE (SCHEDULED DELIVERY PERIOD) | SCHEDULED DELIVERY DATE (SCHEDULED DELIVERY PERIOD) | . . . . . . . . | SCHEDULED DELIVERY DATE (SCHEDULED DELIVERY PERIOD) |
|---|---|---|---|
| REQUIRED QUANTITY | REQUIRED QUANTITY | . . . . . . . . | REQUIRED QUANTITY |

EP 1 640 897 A1

# FIG.2

SCHEDULED DELIVERY DATE(b)

20

| | 2ND WEEK | 3RD WEEK | 4TH WEEK | 5TH WEEK | 6TH WEEK | 7TH WEEK | 8TH WEEK | 9TH WEEK |
|---|---|---|---|---|---|---|---|---|
| 1ST WEEK | F(1,2) | F(1,3) | F(1,4) | F(1,5) | ~10-1 | | | |
| 2ND WEEK | 21 | F(2,3) | F(2,4) | F(2,5) | F(2,6) | ~10-2 | | |
| 3RD WEEK | | 22 | F(3,4) | F(3,5) | F(3,6) | F(3,7) | ~10-3 | |
| 4TH WEEK | | | 23 | F(4,5) | F(4,6) | F(4,7) | F(4,8) | ~10-4 |
| 5TH WEEK | | | | 24 | F(5,6) | F(5,7) | F(5,8) | F(5,9) | ~10-5 |

FORECAST RECEIVE DATE(a)

25

EP 1 640 897 A1

# FIG.3

EP 1 640 897 A1

<u>30</u>

SCHEDULED DELIVERY DATE (b)

|  | $2^{ND}$ WEEK | $3^{RD}$ WEEK | $4^{TH}$ WEEK | $5^{TH}$ WEEK | $6^{TH}$ WEEK | $7^{TH}$ WEEK | $8^{TH}$ WEEK | $9^{TH}$ WEEK | $10^{TH}$ WEEK | $11^{TH}$ WEEK | $12^{TH}$ WEEK | $13^{TH}$ WEEK |
|---|---|---|---|---|---|---|---|---|---|---|---|---|
| $1^{ST}$ WEEK | F(1,2) | F(1,3) | F(1,4) | F(1,5) | F(1,6) | F(1,7) | | | | | | | ~ 10-11 |
| $3^{RD}$ WEEK | | | F(3,4) | F(3,5) | F(3,6) | F(3,7) | F(3,8) | F(3,9) | | | | | ~ 10-12 |
| $5^{TH}$ WEEK | | | | | F(5,6) | F(5,7) | F(5,8) | F(5,9) | F(5,10) | F(5,11) | | | ~ 10-13 |
| $7^{TH}$ WEEK | | | | | | | F(7,8) | F(7,9) | F(7,10) | F(7,11) | F(7,12) | F(7,13) |

FORECAST RECEIVE DATE (a)

31  32  33  34  10-14

# FIG.4

DELIVERY DATE (d)

| 1ST WEEK | 2ND WEEK | 3RD WEEK | |
|---|---|---|---|
| QTY(1) | QTY(2) | QTY(3) | · · · · · · · |

40

# FIG.5

```
                    ┌─────────────────┐
                    │      START      │
                    └─────────────────┘
                             │
         ┌───────────────────────────────────────┐
    S1   │      CREATE FORECAST                   │
         │   TRANSITION TABLE AND                 │
         │   ACTUAL ORDER TABLE                   │
         └───────────────────────────────────────┘
                             │
         ┌───────────────────────────────────────┐
    S2   │      CREATE FORECAST                   │
         │   CONVERSION COEFFICIENT               │
         │         TABLE                          │
         └───────────────────────────────────────┘
                             │
         ┌───────────────────────────────────────┐
    S3   │   CALCULATE STANDARD                   │
         │        DEVIATION                       │
         └───────────────────────────────────────┘
                             │
         ┌───────────────────────────────────────┐
    S4   │   CALCULATE AVERAGE VALUE              │
         │           (Ave)                        │
         └───────────────────────────────────────┘
                             │
                     ╱───────────────╲
                    ╱  s/Ave EQUAL TO  ╲         NO
    S5             ⟨   OR LESS THAN     ⟩──────────┐
                    ╲   THRESHOLD ?    ╱           │
                     ╲───────────────╱            │
                             │ YES                │
         ┌───────────────────────────────────────┐│
    S6   │ CALCULATE FORECAST ORDER              ││
         │         QUANTITIES                     ││
         └───────────────────────────────────────┘│
                             │                     │
         ┌───────────────────────────────────────┐│
    S7   │      CALCULATE MARGINS                 ││
         └───────────────────────────────────────┘│
                             │                     │
         ┌───────────────────────────────────────┐│
    S8   │ CALCULATE FORECAST STOCK             ││
         │         QUANTITIES                     ││
         └───────────────────────────────────────┘│
                             │←────────────────────┘
                    ┌─────────────────┐
                    │       END       │
                    └─────────────────┘
```

# FIG.6

50

FORECAST LT(c)

| | 1 WEEK | 2 WEEKS | 3 WEEKS | 4 WEEKS |
|---|---|---|---|---|
| 1ST WEEK | QTY(2) / F(1,2) | QTY(3) / F(1,3) | QTY(4) / F(1,4) | QTY(5) / F(1,5) |
| 2ND WEEK | QTY(3) / F(2,3) | QTY(4) / F(2,4) | QTY(5) / F(2,5) | QTY(6) / F(2,6) |
| 3RD WEEK | QTY(4) / F(3,4) | QTY(5) / F(3,5) | QTY(6) / F(3,6) | QTY(7) / F(3,7) |
| 4TH WEEK | QTY(5) / F(4,5) | QTY(6) / F(4,6) | QTY(7) / F(4,7) | QTY(8) / F(4,8) |
| 5TH WEEK | QTY(6) / F(5,6) | QTY(7) / F(5,7) | QTY(8) / F(5,8) | QTY(9) / F(5,9) |

51

FORECAST RECEIVE DATE(a)

-- 52

# FIG.7

FORECAST LT(c)          <u>60</u>

| | 1 WEEK ~ 2 WEEKS | 2 WEEKS ~ 3 WEEKS | 3 WEEKS ~ 4 WEEKS |
|---|---|---|---|
| 61 — 1ST WEEK | $\dfrac{QTY(2)+QTY(3)}{F(1,2)+F(1,3)}$ | $\dfrac{QTY(3)+QTY(4)}{F(1,3)+F(1,4)}$ | $\dfrac{QTY(4)+QTY(5)}{F(1,4)+F(1,5)}$ |
| 62 — 2ND WEEK | $\dfrac{QTY(3)+QTY(4)}{F(2,3)+F(2,4)}$ | $\dfrac{QTY(4)+QTY(5)}{F(2,4)+F(2,5)}$ | $\dfrac{QTY(5)+QTY(6)}{F(2,5)+F(2,6)}$ |
| 63 — 3RD WEEK | $\dfrac{QTY(4)+QTY(5)}{F(3,4)+F(3,5)}$ | $\dfrac{QTY(5)+QTY(6)}{F(3,5)+F(3,6)}$ | $\dfrac{QTY(6)+QTY(7)}{F(3,6)+F(3,7)}$ |
| 64 — 4TH WEEK | $\dfrac{QTY(5)+QTY(6)}{F(4,5)+F(4,6)}$ | $\dfrac{QTY(6)+QTY(7)}{F(4,6)+F(4,7)}$ | $\dfrac{QTY(7)+QTY(8)}{F(4,7)+F(4,8)}$ |
| 65 — 5TH WEEK | $\dfrac{QTY(6)+QTY(7)}{F(5,6)+F(5,7)}$ | $\dfrac{QTY(7)+QTY(8)}{F(5,7)+F(5,8)}$ | $\dfrac{QTY(8)+QTY(9)}{F(5,8)+F(5,9)}$ |

FORECAST RECEIVE DATE(a)

# FIG.8

EP 1 640 897 A1

70

FORECAST LT(c)

|  | 1 WEEK ~ 4 WEEKS | 2 WEEKS ~ 5 WEEKS | 3 WEEKS ~ 6 WEEKS |
|---|---|---|---|
| 1ST WEEK | QTY(2)~QTY(5) / F(1,2)~F(1,5) | QTY(3)~QTY(6) / F(1,3)~F(1,6) | QTY(4)~QTY(7) / F(1,4)~F(1,7) |
| 3RD WEEK | QTY(4)~QTY(7) / F(3,4)~F(3,7) | QTY(5)~QTY(8) / F(3,5)~F(3,8) | QTY(6)~QTY(9) / F(3,6)~F(3,9) |
| 5TH WEEK | QTY(6)~QTY(9) / F(5,6)~F(5,9) | QTY(7)~QTY(10) / F(5,7)~F(5,10) | QTY(8)~QTY(11) / F(5,8)~F(5,11) |
| 7TH WEEK | QTY(8)~QTY(11) / F(7,8)~F(7,11) | QTY(9)~QTY(12) / F(7,9)~F(7,12) | QTY(10)~QTY(13) / F(7,10)~F(7,13) |

FORECAST RECEIVE DATE(a)

71 · 72 · 73 · 74

# FIG.9

80

FORECAST LT(c)

| | 1 WEEK | 2 WEEKS | 3 WEEKS | 4 WEEKS |
|---|---|---|---|---|
| STANDARD DEVIATION | s(1) | s(2) | s(3) | s(4) |

# FIG.10

90

FORECAST LT(c)

| | 1 WEEK ~ 2 WEEKS | 2 WEEKS ~ 3 WEEKS | 3 WEEKS ~ 4 WEEKS |
|---|---|---|---|
| STANDARD DEVIATION | s(1-2) | s(2-3) | s(3-4) |

# FIG.11

100

FORECAST LT(c)

| | 1 WEEK ~ 4 WEEKS | 2 WEEKS ~ 5 WEEKS | 3 WEEKS ~ 6 WEEKS |
|---|---|---|---|
| STANDARD DEVIATION | s(1-4) | s(2-5) | s(3-6) |

# FIG.12

FORECAST LT(c)                                    <u>110</u>

| 1 WEEK | 2 WEEKS | 3 WEEKS | 4 WEEKS |
|--------|---------|---------|---------|
| AVERAGE VALUE |

| Ave(1) | Ave(2) | Ave(3) | Ave(4) |
|--------|--------|--------|--------|

AVERAGE VALUE: Ave(1) | Ave(2) | Ave(3) | Ave(4)

# FIG.13

FORECAST LT(c)

<u>120</u>

| 1 WEEK ~ 2 WEEKS | 2 WEEKS ~ 3 WEEKS | 3 WEEKS ~ 4 WEEKS |
|---|---|---|
| AVERAGE VALUE | Ave(1-2) | Ave(2-3) | Ave(3-4) |

# FIG.14

FORECAST LT(c)

<u>130</u>

| 1 WEEK ~ 4 WEEKS | 2 WEEKS ~ 5 WEEKS | 3 WEEKS ~ 6 WEEKS |
|---|---|---|
| AVERAGE VALUE | Ave(1-4) | Ave(2-5) | Ave(3-6) |

30

# FIG.15

FORECAST LT(c)

| 1 WEEK | 2 WEEKS | 3 WEEKS | 4 WEEKS |
|--------|---------|---------|---------|

$a=6$

| F(6,7) | F(6,8) | F(6,9) | F(6,10) | 10-6 |
|--------|--------|--------|---------|

| × | × | × | × |

| Ave(1) | Ave(2) | Ave(3) | Ave(4) | 110 |
|--------|--------|--------|--------|

↓ ↓ ↓ ↓

SCHEDULED DELIVERY PERIOD(b)

| 7TH WEEK | 8TH WEEK | 9TH WEEK | 10TH WEEK |
|----------|----------|----------|-----------|

| RD(7) | RD(8) | RD(9) | RD(10) | 140 |
|-------|-------|-------|--------|

# FIG.16

FORECAST LT(c)

| 1 WEEK | 2 WEEKS | 3 WEEKS | 4 WEEKS | |
|--------|---------|---------|---------|---|
| F(6,7) | F(6,8) | F(6,9) | F(6,10) | 10-6 |

a=6

×　　　×　　　×

| Ave(1-2) | Ave(2-3) | Ave(3-4) | |
|----------|----------|----------|---|
| | | | 120 |

↓　　　↓　　　↓

SCHEDULED DELIVERY PERIOD(b)

| 7$^{TH}$ WEEK | 8$^{TH}$ WEEK | 9$^{TH}$ WEEK | |
|---------|---------|---------|---|
| RD(7) | RD(8) | RD(9) | 150 |

# FIG.17

FORECAST LT(c)

| 1 WEEK | 2 WEEKS | 3 WEEKS | 4 WEEKS | |
|---|---|---|---|---|
| F(6,7) | F(6,8) | F(6,9) | F(6,10) | 10-6 |

a=6

× × ×

| Ave(1-2) | Ave(2-3) | Ave(3-4) | 120 |
|---|---|---|---|

↓ ↓ ↓

SCHEDULED DELIVERY PERIOD(b)

| 8TH WEEK | 9TH WEEK | 10TH WEEK |
|---|---|---|
| RD(8) | RD(9) | RD(10) |

# FIG.18

FORECAST LT(c)

| 1 WEEK | 2 WEEKS | 3 WEEKS | 4 WEEKS | 5 WEEKS | 6 WEEKS |
|---|---|---|---|---|---|
| F(9,10) | F(9,11) | F(9,12) | F(9,13) | F(9,14) | F(9,15) |

a=9 — 10-15

× × ×

| Ave(1-4) | Ave(2-5) | Ave(3-6) |
|---|---|---|

— 130

↓ ↓ ↓

SCHEDULED DELIVERY PERIOD(b)

| 10$^{TH}$ WEEK | 11$^{TH}$ WEEK | 12$^{TH}$ WEEK |
|---|---|---|
| RD(10) | RD(11) | RD(12) |

— 160

EP 1 640 897 A1

# FIG.19

FORECAST LT(c)

| 1 WEEK | 2 WEEKS | 3 WEEKS | 4 WEEKS | 5 WEEKS | 6 WEEKS |
|--------|---------|---------|---------|---------|---------|
| F(9,10) | F(9,11) | F(9,12) | F(9,13) | F(9,14) | F(9,15) |

a=9        ∽ 10-15

×        ×        ×

| Ave(1-4) | Ave(2-5) | Ave(3-6) |
|----------|----------|----------|

∽ 130

↓        ↓        ↓

SCHEDULED DELIVERY PERIOD(b)

| 11$^{TH}$ WEEK | 12$^{TH}$ WEEK | 13$^{TH}$ WEEK |
|----------------|----------------|----------------|
| RD(11) | RD(12) | RD(13) |

EP 1 640 897 A1

# FIG.20

FORECAST LT(c)

| 1 WEEK | 2 WEEKS | 3 WEEKS | 4 WEEKS | |
|--------|---------|---------|---------|---|
| F(6,7) | F(6,8) | F(6,9) | F(6,10) | 10-6 |

a=6

× × × ×

| s(1) | s(2) | s(3) | s(4) | 80 |
|------|------|------|------|----|

| s'(1) | s'(2) | s'(3) | s'(4) | |
|-------|-------|-------|-------|---|

SCHEDULED DELIVERY PERIOD(b)

| 7TH WEEK | 8TH WEEK | 9TH WEEK | 10TH WEEK |
|----------|----------|----------|-----------|
| Σ M(7) | Σ M(8) | Σ M(9) | Σ M(10) |

| M(7) | M(8) | M(9) | M(10) | 170 |
|------|------|------|-------|-----|

# FIG.21

FORECAST LT(c)

1 WEEK  2 WEEKS  3 WEEKS  4 WEEKS

a=6

| F(6,7) | F(6,8) | F(6,9) | F(6,10) | ~ 10-6 |

$\times$　　$\times$　　$\times$

| s(1-2) | s(2-3) | s(3-4) | ~ 90 |

| s'(1-2) | s'(2-3) | s'(3-4) |

SCHEDULED DELIVERY PERIOD(b)

7$^{\text{TH}}$ WEEK　　8$^{\text{TH}}$ WEEK　　9$^{\text{TH}}$ WEEK

| $\Sigma$ M(7) | $\Sigma$ M(8) | $\Sigma$ M(9) |

| M(7) | M(8) | M(9) | ~ 180 |

# FIG.22

FORECAST LT(c)

| 1 WEEK | 2 WEEKS | 3 WEEKS | 4 WEEKS | 5 WEEKS | 6 WEEKS |
|--------|---------|---------|---------|---------|---------|

a=9

| F(9,10) | F(9,11) | F(9,12) | F(9,13) | F(9,14) | F(9,15) |
|---------|---------|---------|---------|---------|---------|

10-15

× × ×

| s(1-4) | s(2-5) | s(3-6) |
|--------|--------|--------|

100

↓ ↓ ↓

| s'(1-4) | s'(2-5) | s'(3-6) |
|---------|---------|---------|

↓ ↓ ↓

SCHEDULED DELIVERY PERIOD(b)

| 10$^{TH}$ WEEK | 11$^{TH}$ WEEK | 12$^{TH}$ WEEK |
|----------------|----------------|----------------|
| $\Sigma$ M(10) | $\Sigma$ M(11) | $\Sigma$ M(12) |

↓ ↓ ↓

| M(10) | M(11) | M(12) |
|-------|-------|-------|

190

# FIG.23

SCHEDULED DELIVERY PERIOD(b)

| 7TH WEEK | 8TH WEEK | 9TH WEEK | 10TH WEEK | |
|---|---|---|---|---|
| RD(7) | RD(8) | RD(9) | RD(10) | ～140 |
| + | + | + | + | |
| M(7) | M(8) | M(9) | M(10) | ～170 |
| ↓ | ↓ | ↓ | ↓ | |
| Z(7) | Z(8) | Z(9) | Z(10) | |

# FIG.24

SCHEDULED DELIVERY PERIOD (b)

| 7$^{TH}$ WEEK | 8$^{TH}$ WEEK | 9$^{TH}$ WEEK |
|:---:|:---:|:---:|
| RD(7) | RD(8) | RD(9) |

~ 150

+ + +

| M(7) | M(8) | M(9) |
|:---:|:---:|:---:|

~ 180

↓ ↓ ↓

| Z(7) | Z(8) | Z(9) |
|:---:|:---:|:---:|

# FIG.25

SCHEDULED DELIVERY PERIOD (b)

| 10$^{TH}$ WEEK | 11$^{TH}$ WEEK | 12$^{TH}$ WEEK |
|---|---|---|
| RD(10) | RD(11) | RD(12) |

~ 160

+      +      +

| M(10) | M(11) | M(12) |
|---|---|---|

~ 190

↓      ↓      ↓

| Z(10) | Z(11) | Z(12) |
|---|---|---|

# FIG.26

# FIG.27

# FIG.28

# FIG.29

## INTERNATIONAL SEARCH REPORT

| | International application No. |
| --- | --- |
| | PCT/JP2004/008196 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)
JICST FILE(JOIS), WPI, INSPEC(DIALOG)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-318613 A (Rubycon Corp.), 31 October, 2002 (31.10.02), Full text; Figs. 1 to 31 (Family: none) | 1-16 |
| Y | JP 2002-12308 A (Hitachi, Ltd. et al.), 15 January, 2002 (15.01.02), Full text; Figs. 1 to 9 (Family: none) | 1-16 |
| A | JP 2002-73752 A (Kao Corp.), 12 March, 2002 (12.03.02), Full text; Figs. 1 to 9 (Family: none) | 1-16 |

[X] Further documents are listed in the continuation of Box C.  [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 July, 2004 (20.07.04) | 10 August, 2004 (10.08.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/008196 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-325488 A  (Hitachi, Ltd.), 22 November, 2001 (22.11.01), Full text; Figs. 1 to 15 (Family: none) | 1-16 |

Form PCT/ISA/210 (continuation of second sheet) (January 2004)